# EUROPEAN PATENT SPECIFICATION

(11) **EP 2 502 831 B1**
(45) Date of publication and mention of the grant of the patent: **25.09.2013**
(21) Application number: 12002183.7
(22) Date of filing: 22.03.2012
(51) Int. Cl.: B65B 31/04, B65B 39/12, B65B 43/46

(54) **Intermittent transport-type rotary bag filling and packaging apparatus**
Intermittierende Transport-Drehbeutelbefüllungs- und Verpackungsmaschine
Appareil rotatif de remplissage et de conditionnement de sac de type transport intermittent

(30) Priority: 24.03.2011 JP 2011066481
(43) Date of publication of application: 26.09.2012
(73) Proprietor: Toyo Jidoki Co., Ltd., Tokyo (JP)
(72) Inventor: Kawamura, Kenji, Iwakuni-shi Yamaguchi (JP); Honda, Yasuyuki, Iwakuni-shi Yamaguchi (JP)
(74) Representative: Schubert, Siegmar

(56) References cited:
- JP-A- 54 058 591
- JP-A- 2005 255 236
- JP-B2- 3 742 042

## Description

### BACKGROUND OF THE INVENTION

### 1. Field of the Invention

The present invention relates to a rotary bag filling and packaging apparatus of an intermittent transport type that grips two side edges of a bag with a gripper, transports the bag intermittently in a suspended state, inserts a gas injection nozzle into the bag while the bag is being transported, injects the bag with gas, and fills the bag with material to be packaged through a hopper while gas injection is in progress and more particularly relates to an intermittently transport-type rotary bag filling and packaging apparatus (of a synchronized type) in which respective gas injection nozzles are installed in association with each gripper and travel intermittently in conjunction with the grippers.

### 2. Description of the Related Art

In a rotary bag filling and packaging apparatus of an intermittently transporting type, generally, a gas injection nozzle is, during the packaging process, inserted into a bag through its mouth portion so as to replace the air in the bag with an inert gas (for example, nitrogen gas). The most common systems employed, for example, are those as follows:
(1) Stationary system. A gas injection nozzle that can be raised and lowered is disposed (fixedly) in a single stop position or a plurality of stop positions along a bag transport path, the gas injection nozzle is inserted into a bag that has been transported to and stopped in the stop position(s) and effects gas replacement in the bag, and then after which the nozzle is withdrawn (see Japanese Patent Application Laid-Open (Kokai) No. H7-313128).
(2) Tracking system. One or several gas injection nozzles that can be raised and lowered are provided to make a reciprocation motion through a predetermined distance along a bag transport path, and as the gas injection nozzle travels with the transport of the bags, the gas injection nozzle is inserted in a bag and effects gas injection, and at the end of the travel, the gas injection nozzle is withdrawn and returned to the original position (see Japanese Patent Application Laid-Open (Kokai) No. 2005-255236).
(3) Synchronized system. Several gas injection nozzles are respectively installed in association with each one of several grippers that intermittently travel along an annular travel path, and the nozzles are caused to travel intermittently in conjunction (or in sync) with the grippers (that have bags); and within a predetermined interval, the gas injection nozzles are inserted into the bags, effect gas injection, and then they are withdrawn in predetermined positions (see Japanese Utility Model Application Publication No. S62-21521, Japanese Patent No. 3742042, and Japanese Patent Application Laid-Open (Kokai) Nos. 2007-126208 and 2008-308204).

Among the systems described above, the synchronized system has the advantage that it has a longer gas injection time and a higher gas replacement ratio in comparison with the stationary system and tracking system; and for a rotary bag filling and packaging apparatus, there have been various proposals about a combination of such a synchronized-type gas injection nozzle and a hopper that is used as a guide for filling the material to be packaged.

Japanese Utility Model Application Publication No. S62-21521 discloses that a hopper installed in a predetermined stop position (packaging material filling position) is swiveled within a horizontal plane and then lowered and inserted into a bag with its lower end while gas injection by a synchronized-type gas injection nozzle is in progress, and, once the bag is filled with the material to be packaged, the hopper is raised and then swiveled in the opposite direction, thereby retracting it from the travel path of the gas injection nozzle. When viewed from above, the position the gas injection nozzle is inserted is set at a location offset from the center of the bag, and, when viewed from above, the position the hopper is inserted is set at a more or less central location within the bag, so that mutual interference between the gas injection nozzle and the hopper in the bag is prevented.

Japanese Patent No. 3742042 describes a rotary bag filling and packaging apparatus, in which a hopper that has a gas injection nozzle secured thereto is installed in association with each gripper and rotates intermittently in conjunction with the gripper. In this structure, the gas injection nozzle and the hopper both form part of a synchronized system. When viewed from above, the position the hopper is inserted into a bag is situated at a more or less central location within the bag and the position the gas injection nozzle is inserted into the bag is situated at a location offset from the center of the bag.

Japanese Patent Application Laid-Open (Kokai) No. 2007-126208 describes a rotary bag filling and packaging apparatus. In this apparatus, an aperture guide, also used as a gas injection nozzle, is installed in association with each gripper and rotates intermittently in conjunction with the gripper. This aperture guide (also used as a gas injection nozzle) forms part of a synchronized system. Since the aperture guide is also used as a gas injection nozzle, when viewed from above, the position the gas injection nozzle is inserted in a bag is offset from the center of the bag.

Japanese Patent Application Laid-Open (Kokai) No. 2008-308204 discloses that a hopper swiveled to a predetermined stop position (packaging material filling position) is lowered and inserted into a bag, and, once the bag is filled with the material to be packaged, the hopper is raised and then swiveled in the same direction, thus retracting the hopper from the area above the bag. After retracting the hopper from the area above the bag, the synchronized-type gas injection nozzle is moved and then lowered into the area above the bag in the next stop position. The interference between the synchronized-type gas injection nozzle and the hopper is thus prevented.

On the other hand, Japanese Patent Application Laid-Open (Kokai) No. S54-58591 discloses a hopper and a gas injection nozzle disposed in the inside center thereof, although it is unclear if they are applicable to a rotary bag filling and packaging apparatus and thus this cannot be called a synchronized system. The gas replacement step is performed in the following manner: the gas injection nozzle is inserted in the center of a bag until the injection outlet at its lower end reaches very near the bottom of the bag, gas injection is next initiated, then the hopper is lowered and inserted into the bag (also in the center of the bag), and, after filling the bag with the material to be packaged, the hopper is raised and withdrawn from the bag, after which the gas injection nozzle is raised and gas injection is stopped.

As disclosed in Japanese Patent Application Laid-Open (Kokai) No. S54-58591, if the gas injection nozzle is inserted in the central portion of the bag and initiates gas injection prior to filling the bag with the material to be packaged through the hopper, and if the gas injection continues while the bag is filled with the material to be packaged as well as after it is filled, then gas replacement in the inner space of the bag can be performed in a uniform manner, and the air present in the gaps between the particles of the material to be packaged can be subjected to gas replacement in an efficient manner, thus improving the ratio of gas replacement in the bag.

The use of a synchronized-type gas injection nozzle, which allows for relatively long gas injection to be performed without degrading the efficiency of production, is effective in implementing such gas replacement in a rotary bag filling and packaging apparatus.

Nonetheless, the following problems are encountered in using conventional rotary bag filling and packaging apparatuses equipped with synchronized-type gas injection nozzles.
(1) In the rotary bag filling and packaging apparatus of Japanese Utility Model Application Publication No. S62-21521, in order to prevent interference between the hopper and the injection nozzle, the placement of the hopper and gas injection nozzle involves limitations, and the hopper and the injection nozzle are disposed at a location offset from the center of the bag.
(2) In the rotary bag filling and packaging apparatus of Japanese Patent No. 3742042, the gas injection nozzle is secured to the side wall of the hopper; as a result, the placement of the gas injection nozzle (which is situated at a location offset from the location of the center of the bag) is limited, or there are limitations on the depth of insertion of the gas injection nozzle and on the timing of the start and finish of gas injection. In addition, since a plurality of hoppers and grippers are provided on a rotary part (table) and synchronously moved and raised, the construction of the rotary bag filling and packaging apparatus is complicated, and the weight of the rotary part can be increased.
(3) In the rotary bag filling and packaging apparatus of Japanese Patent Application Laid-Open (Kokai) No. 2007-126208, the aperture guide is also used as a gas injection nozzle; as a result, the position of insertion of the gas injection nozzle (aperture guide) is offset from the center of the bag when viewed from above.
(4) In the rotary bag filling and packaging apparatus of Japanese Patent Application Laid-Open (Kokai) No. 2008-308204, in order to prevent interference between the hopper and the injection nozzle, the timing of gas injection nozzle insertion and injection is set to occur after the retraction of the hopper.

### BRIEF SUMMARY OF THE INVENTION

The above issues indicate that improvement in gas replacement efficiency can be impeded if the gas injection nozzles and the hoppers are not installed in the optimal position (normally, near the center of the bag when viewed from above) or if gas injection is performed only after filling of the bag with the material to be packaged.

It is, therefore, an object of the present invention to provide a rotary bag filling and packaging apparatus which is equipped with a synchronized-type gas injection nozzles and stationary or tracking-type hoppers and in which even when bags are filled with the material to be packaged while gas injection into the bags by the gas injection nozzles is in progress, interference between hoppers and gas injection nozzles can be prevented without considerably displacing the location of installation of the gas injection nozzles from the optimal position (normally near the center of the bag when viewed from above).

The above object is accomplished by the present invention which is for a rotary bag filling and packaging apparatus that includes:
a plurality of grippers for holding bags and installed at regular intervals along an annular travel path so as to travel intermittently along the travel path within a horizontal plane,
a plurality of gas injection nozzles that are respectively provided in association with each of the grippers, travel along with the grippers intermittently, and are raised and lowered at a predetermined timing during the intermittent travel, and
one, two, or more packaging processing members including a hopper provided along the travel path; and
in this filling and packaging apparatus:
each of the bags is suspended while being gripped at two side edges thereof by each of the plurality of grippers,
the bags are transported intermittently in this state,
each of the gas injection nozzles is inserted into each of the bags and injects gas therein during transport of the bags, and
the bags are filled with material to be packaged via the hopper while the gas injection is in progress.

In the rotary bag filling and packaging apparatus as described above, according to one aspect of the present invention:
the hopper is comprised of two vertically split hopper portions that are separated and joined at a predetermined timing,
the hopper is raised and lowered at a predetermined timing,
when the two hopper portions are separated, the hopper is retracted from the travel path of the intermittently traveling gas injection nozzle, and
when the two hopper portions are joined, the hopper takes a cylindrical shape (to make a cylindrical hopper) and encloses therein the gas injection nozzle.

Furthermore, in the rotary bag filling and packaging apparatus as described above, according to another aspect of the present invention:
the hopper is comprised of two vertically split hopper portions that are separated and joined at a predetermined timing,
the hopper is raised and lowered at a predetermined timing and travels between an advanced position and a retracted position within a substantially horizontal plane such that
   when the two hopper portions are separated, the hopper can travel by circumventing the gas injection nozzle and, in the retracted position, is retracted from the travel path of the intermittently traveling gas injection nozzles, and
   when the two hopper portions are joined in the advanced position, the hopper takes a cylindrical shape (to make a cylindrical hopper) and encloses therein the gas injection nozzle.

In these structures in which the hopper is comprised of two vertically split hopper portions, the two hopper portions can be connected by a hinge(s) so that the hopper portions are separated when opened and joined when closed along the axis (or pivot) of the hinge(s).

In the rotary bag filling and packaging apparatus as described above, according to a further aspect of the present invention:
the hopper is formed with a concave groove of a predetermined depth that extends vertically on its side wall, and
the hopper travels between a filling position (in-bag inserted position) and a retracted position at a predetermined timing such that
   in the retracted position, the hopper is retracted from the travel path of the intermittently traveling gas injection nozzles, and
   in the filling position, the gas injection nozzle is positioned inside the concave groove of the hopper.

Furthermore, in the rotary bag filling and packaging apparatus as described above, according to a still further aspect of the present invention:
the hopper is comprised of two sub-hoppers disposed with a predetermined gap therebetween, and
the hopper travels between a filling position (in-bag inserted position) and a retracted position at a predetermined timing such that
   in the retracted position, the hopper is retracted from the travel path of the intermittently traveling gas injection nozzle, and
   in the filling position, the gas injection nozzle is positioned in the above-described gap.

In the rotary bag filling and packaging apparatus as described above, according to a still further aspect of the present invention:
each of the plurality of gas injection nozzles is comprised of
   a dispensing opening at a lower end thereof,
   a substantially vertical insertion portion that is inserted into the bag when lowered, and
   an extended portion that is bent away from the upper end of the insertion portion and extends in a transverse direction;
the hopper has a cutout portion of a predetermined depth formed in a side wall thereof so as to extend upwardly from the lower end;
the hopper is raised and lowered at a predetermined timing such that
   when raised, the hopper is retracted from the travel path of the intermittently traveling gas injection nozzles, and
   when lowered, the extended portion of the gas injection nozzle enters into the cutout portion of the hopper and, when viewed from above, the insertion portion is located inside of the hopper.

In this structure, a flange-shaped cover member that matches the cutout portion of the hopper can be installed on the extended portion of the gas injection nozzle. With this structure, when the hopper is lowered, this cover member substantially seals the cutout portion, forming part of the side wall of the hopper.

Furthermore, in the rotary bag filling and packaging apparatus as described above, according to a further aspect of the present invention:
the hopper is comprised of two (first and second) vertically split hopper portions,
the first hopper portion is secured to each of the gas injection nozzles, and
the second hopper portion is raised and lowered at a predetermined timing and travels between an advanced position and a retracted position within a substantially horizontal plane such that
   in the retracted position, the second hopper portion is retracted from the travel path of the intermittently traveling gas injection nozzles, and
   in the advanced position, the hopper is composed of the two hopper portions and encloses therein the gas injection nozzle.

In the rotary bag filling and packaging apparatus set forth above, the hopper can be a tracking type (in which the hopper reciprocates along a part of the bag transport path and moves, during its forward travel motion, in synchronism with the transport of the bag), or it can be a stationary type (in which the hopper is disposed in a fixed position along the bag transport path and does not move in synchronism with the bag transport movement).

In addition, in the rotary bag filling and packaging apparatus set forth above, the annular travel path of the grippers (or the annular transport path of the bag) is not only circular but also it may include other annular shapes such as a racetrack-shape path, etc.

As seen from the above, according to the present invention, in an intermittent transport-type rotary bag filling and packaging apparatus, interference between synchronized-type gas injection nozzles and stationary or tracking-type hoppers is prevented without considerably displacing the location of installation of the gas injection nozzles from the optimal position (normally near the center of the bag) even when the bags are filled with the material to be packaged while gas injection into a bag by the gas synchronized-type gas injection nozzles is in progress. Furthermore, there are no factors impeding the degree of freedom in terms of settings, such as the depth of insertion of the gas injection nozzles as well as the timing of the start and end of gas injection. Accordingly, the present invention provides a high level of gas replacement efficiency.

### BRIEF DESCRIPTION OF THE SEVERAL VIEWS OF THE DRAWINGS

FIG. 1 is a top plan view of an inventive rotary bag filling and packaging apparatus according to the present invention.
FIG. 2 (2(a) and 2(b) is a perspective view illustrating a gas injection nozzle/hopper interference preventing construction for the rotary bag filling and packaging apparatus of FIG. 1.
FIG. 3 (3(a) and 3(b)) is a perspective view illustrating the manner of operation of the interference preventing construction.
FIG. 4 (4(a) and 4(b)) is a perspective view illustrating another gas injection nozzle/hopper interference preventing construction for a rotary bag filling and packaging apparatus according to the present invention.
FIG. 5 (5(a) through 5(c)) is a perspective view illustrating yet another gas injection nozzle/hopper interference preventing construction for a rotary bag filling and packaging apparatus according to the present invention.
FIG. 6 (6(a) through 6(d)) is a perspective view illustrating yet another gas injection nozzle/hopper interference preventing construction for a rotary bag filling and packaging apparatus according to the present invention.
FIG. 7 (7(a) through 7(d)) is a perspective view illustrating yet another gas injection nozzle/hopper interference preventing construction for a rotary bag filling and packaging apparatus according to the present invention.
FIG. 8 (8(a) through 8(c)) is a perspective view illustrating yet another gas injection nozzle/hopper interference preventing construction for a rotary bag filling and packaging apparatus according to the present invention.
FIG. 9 (9(a) and 9(b)) is a perspective view illustrating yet another gas injection nozzle/hopper interference preventing construction for a rotary bag filling and packaging apparatus according to the present invention.
FIG. 10 (10(a) through 10(c)) is a perspective view illustrating yet another gas injection nozzle/hopper interference preventing construction for a rotary bag filling and packaging apparatus according to the present invention.
FIG. 11 (11 (a) through 11(c)) is a perspective view illustrating yet another gas injection nozzle/hopper interference preventing construction for a rotary bag filling and packaging apparatus according to the present invention.
FIG. 12 (12(a) through 12(c)) is a perspective view illustrating yet another gas injection nozzle/hopper interference preventing construction for a rotary bag filling and packaging apparatus according to the present invention.
FIG. 13 (13(a) through 13(c)) is a perspective view illustrating yet another gas injection nozzle/hopper interference preventing construction for a rotary bag filling and packaging apparatus according to the present invention

### DETAILED DESCRIPTION OF THE INVENTION

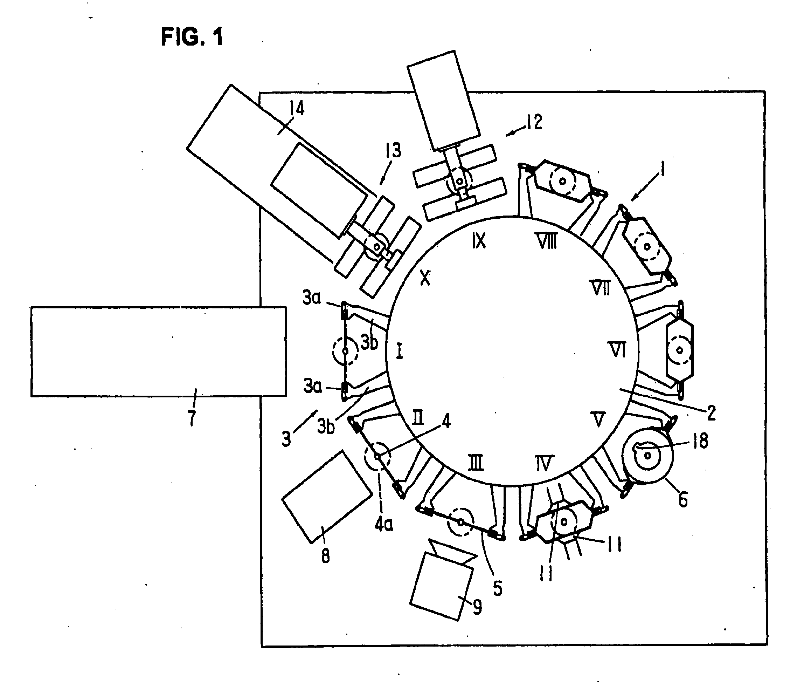

A rotary bag filling and packaging apparatus and, in particular, the gas injection nozzle/hopper interference preventing construction therefor according to the present invention will be described below in detail with reference to FIGs. 1 through 13.

The rotary bag filling and packaging apparatus illustrated in FIG. 1 according to the present invention includes a rotary bag transporting apparatus 1, in which a table 2 that intermittently rotates in one direction (to the left in FIG. 1) and a plurality of pairs of grippers 3 (ten (10) pairs in this example) that are disposed at regular intervals around the periphery of the table 2 are provided. The grippers 3 travel intermittently along a circular travel path in synchronism with the intermittent rotation of the table 2; and during their intermittent travel, a pair of gripping portions 3a and 3a of each one of the grippers 3 are opened and closed at a predetermined timing. Alternatively, the gap between a pair of arms 3b and 3b can be widened and narrowed.

As seen from FIG. 1, a gas injection nozzle 4 is disposed in conjunction with each one of the gripper 3. The gas injection nozzles 4 are arranged at regular intervals along a circular travel path that is concentric with the travel path of the grippers 3 (and practically coincides with the above-described travel path in top plan view) and intermittently rotate in the same direction and in synchronism with the intermittent rotation of the grippers 3. The gas injection nozzles 4 are attached to the lower ends of rods of air cylinders 4a secured to a mounting frame, not shown, disposed, for example, on the table 2. The locations of the gas injection nozzles 4 in top plan view are midway between the pairs of opposed gripping portions 3a and 3a of the corresponding gripper 3. While intermittently traveling along the circular travel path, the gas injection nozzles 4 are raised and lowered at predetermined timing in concert with the actuation of the air cylinders 4a and eject an inert gas (e.g. nitrogen gas) from the dispensing openings at the lower ends thereof at predetermined timing.

The grippers 3 travel intermittently along the travel path within a horizontal plane in concert with the intermittent rotation of the table 2 and, as the table 2 (gripper 3) completes a single rotation, the system performs the various packaging and processing operations such as supplying the bags 5 to the grippers 3, gripping or holding both side edges of each of the bags 5 with the grippers 3, gas injection into the bags 5 using the gas injection nozzles 4 (performing gas replacement in the bags), filling the bags with, for example, solid matter via a hopper 6, sealing the openings (the mouths) of the bags 5, etc. It should be noted that in the shown example the travel path of the grippers 3 (in particular pairs of gripping portions 3a and 3a) substantially coincides with the travel path of the bags 5, and the bags 5 are gripped by the grippers 3 and intermittently transported along the travel path at even angular intervals.

The rotation of the table 2 is made up of ten (10) stops and movements, and various packaging and processing operations are performed throughout the total of ten steps.

A more specific explanation of the ten steps will be provided below with reference to FIG. 1.

The first step is a bag supplying step that is done by a conveyor magazine-type bag supplying apparatus 7. The conveyor magazine-type bag supplying apparatus 7 is disposed in the vicinity of a stop position (first stop position (I)) of the grippers 3 and supplies bags 5 to the grippers 3. The supplied bags 5 are bags having openings at the upper edge thereof, and they are gripped or held by the side edges in the vicinity of the openings (the mouths) by the grippers 3 and suspended such that the openings face upward.

The second step is a printing step that is done by a printer 8. The printer 8 is provide in the vicinity of a stop position (second stop position (II)) of the grippers 3 and prints dates, etc. on the surface of the bags 5 gripped by the grippers 3.

The third step is a printed character inspection step that is done by a printed character inspection apparatus 9. The printed character inspection apparatus 9 is disposed in the vicinity of a stop position (third stop position (III)) of the grippers 3 and inspects the characters printed on the bags 5 gripped by the grippers 3.

The fourth step is an opening step that is done by an opening apparatus. The opening apparatus is disposed in the vicinity of a stop position (fourth stop position (IV)) of the grippers 3 and opens the bags 5 gripped by the grippers 3, The opening apparatus has a pair of suction members (suction cups 11) displaceable towards and away from each other. It should be noted that gas injection (gas ejection) from the lower ends of the gas injection nozzles 4 is initiated during the fourth step. At such time, the lower ends of the gas injection nozzles 4 are located above the bags 5; and subsequently, while moving from this stop position toward the next, fifth stop position, the gas injection nozzles 4 are lowered and inserted into the bags 5 so as to be in the vicinity of their center.

The fifth step is a filling step of the material to be packaged, where a hopper 6, which is used to fill the bags 5 gripped by the grippers 3 with the material to be packaged, is disposed in the vicinity of a stop position (fifth stop position (V)) of the grippers 3 such that the hopper 6 can be raised and lowered. The hopper 6 is constituted by cylindrical side walls and has a generally inverted truncated cone shape (or a substantially cylindrical shape) with the upper opening larger than the lower opening. The hopper 6 is of a so-called stationary type and it is disposed in a fixed position along the travel path of the bags 5 and does not travel along the above-described travel path.

The hopper 6 is in a raised position until the grippers 3 (and thus the bags 5) and gas injection nozzles 4 arrive and stop at the fifth stop position so that the bags 5 and gas injection nozzles 4 arrive at the fifth stop position without interfering with the hopper 6. When the grippers 3 and gas injection nozzles 4 stop at the fifth stop position, the hopper 6 is lowered and its lower end portion is inserted through the mouth of a bag 5 into the center of the bag, whereupon the bag 5 is filled by a packaging material filling apparatus, not shown, with the material to be packaged via the hopper 6.

The hopper 6 is raised before the grippers 3 (bags 5) and gas injection nozzles 4 start moving from the fifth stop position towards the sixth stop position, and it retracts from the transport path of the bags 5 and the travel path of the gas injection nozzles 4, thus preventing interference therewith. At such time, gas injection into the bags 5 by the gas injection nozzles 4 is still in progress.

Steps 6, 7, and 8 are gas injection steps during which gas injection continues while the grippers 3 (bags 5) and gas injection nozzles 4, which have started traveling away from the fifth stop position, intermittently travel towards the eighth stop position (VIII) while stopping at the sixth stop position (VI) and seventh stop position (VII). In the eighth stop position the gap between the arms 3b and 3b of each one of the grippers 3 is widened, thereby pulling the mouth of the bag 5 in the width direction of the bag and tightly closing the mouth.

As the grippers 3 (bags 5) and gas injection nozzles 4 travel from the eighth stop position (VIII) towards the ninth stop position (IX), the gas injection nozzles 4 are raised and pulled out of the bags 5 and gas injection (gas ejection) is also stopped.

The ninth step is a bag mouth sealing step that is done by a sealing apparatus 12. The sealing apparatus 12 is disposed in the vicinity of a stop position (ninth stop position (IX)) of the grippers 3, and it heat seals the mouths of the bags 5 gripped by the grippers 3. The sealing apparatus 12 has a pair of seal bars.

The tenth step is a sealed portion cooling and product release step that are done by a product bag carry-out conveyer 14 and a sealed portion cooling apparatus 13. The product bag carry-out conveyer 14 and the sealed portion cooling apparatus 13 are disposed in the vicinity of a stop position (tenth stop position (X)) of the grippers 3, and they cool the sealed portion of the bag 5 gripped by the grippers 3. The sealed portion cooling apparatus 13 has a pair of cooling bars that grip and cool the sealed portion.

In the tenth step, the gripping portions 3a and 3a of the grippers 3 are opened, and then the cooling bars are also opened. The product bag 5 drops and is carried outside on the product bag carry-out conveyor 14.

### First Interference Preventing Construction

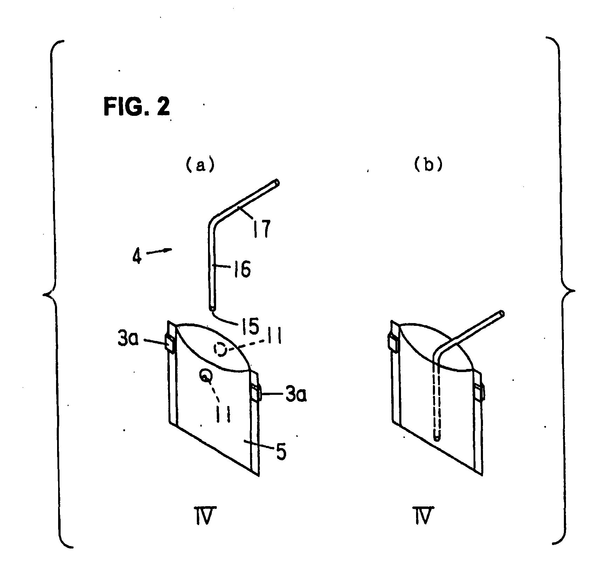

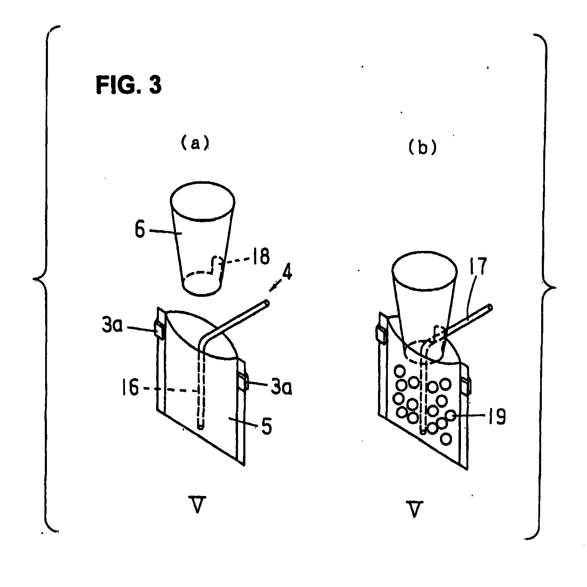

Next, the first construction which prevents interference between the gas injection nozzles 4 and used in the rotary bag filling and packaging apparatus of the present invention illustrated in FIG. 1 will be described with reference to FIGs. 2 and 3.

Each of the gas injection nozzles 4 has a dispensing opening 15 at the lower end thereof, and it is comprised of a substantially vertical insertion portion 16 that is to be inserted into a bag 5 when the nozzle is lowered and an extension portion 17 that is bent away from top end of the insertion portion 16 and extends in a transverse direction (in this example, in a generally horizontal or slanted upward direction) towards the central part of the table 2. The length of the extension portion 17 in top plan view is set to be at least larger than the radius of the hopper 6. The tip end of the extension portion 17 is attached to the rod of an air cylinder 4a (not shown in FIGs. 2 and 3). It should be noted that it is sufficient to ensure that when the gas injection nozzle 4 is moved and the hopper 6 is raised and lowered, the two do not interfere with each other, and that there are no particular limitations concerning the shape of the tip end of the extension portion 17.

The hopper 6 is formed in substantially an inverted truncated cone shape by the cylindrical side walls, and it has a cutout portion 18 formed upwardly from the lower end thereof to a predetermined depth (height) in a location facing the extension portion 17 of the gas injection nozzle 4, i.e. facing the center of the travel path of the gas injection nozzles (center of the table 2). In stop position V, the hopper 6 is raised and lowered between a raised position (retracted position) and an in-bag inserted position (filling position) at a predetermined timing using a drive means, not shown. In the retracted position, the hopper 6 is in a state (retracted state) in which it is offset from the transport path of the bags 5 and the travel path of the gas injection nozzles 4; and in the filling position, the lower end portion of the hopper 6 is inserted into the central portion of a bag 5 to a predetermined depth (to enable filling with the material to be packaged).

FIGs. 2 and 3 respectively illustrate the position and operation of the gas injection nozzle 4 and hopper 6 in stop position IV and stop position V.

When a bag 5, whose side edges are gripped by the gripper 3 (only a single pair of gripping portions 3a and 3a is shown in FIG. 2(a)), is transported and stopped in stop position IV, the suction cups 11 and 11 adhere to both sides of the bag 5 and open the mouth of the bag 5 (FIG. 2(a)). At such time, the gas injection nozzle 4 is in a stand-by raised position. Subsequently, the insertion portion 16 of the gas injection nozzle 4 is lowered to a substantially central position inside the bag 5, the dispensing opening 15 is stopped in a position close to the bottom of the bag (injection position), and gas injection is initiated (FIG. 2(b)).

On the other hand, when the bag 5 and gas injection nozzle 4 travel to and stop in stop position V (FIG. 3(a)), the hopper 6, which is in the retracted position, is lowered to a substantially central position inside the bag 5 and stopped in the above-described filling position, after which the bag 5 is loaded and filled with the material to be packaged 19 via the hopper 6 (FIG. 3(b)). When the hopper 6 is lowered from the retracted position, the extension portion 17 of the gas injection nozzle 4 enters the cutout portion 18 of the hopper 6, and furthermore, there is no interference (collision) between the hopper 6 and gas injection nozzle 4 before the hopper 6 stops in the filling position.

After filling the bag with the material to be packaged 19, the hopper 6 is raised toward the retracted position and removed from the bag 5. The cutout portion 18 of the hopper 6 is removed from the extension portion 17 of the gas injection nozzle 4, and the hopper 6 is again retracted from the transport path of the bags 5 and the travel path of the gas injection nozzles 4. Subsequently, the bag 5 and gas injection nozzle 4 initiate movement toward the next stop position VI.

It should be noted that if interference between the gas injection nozzle 4 and hopper 6 is avoidable, the operative timing of the drive means of the hopper 6 is not limited to the one described above. In other words, for example, the operative timing of the drive means can be set such that the hopper 6 starts descending before the bag 5 and gas injection nozzle 4 stop in stop position V. In addition, it can be set such that the bag 5 and gas injection nozzle 4 start moving towards stop position VI before the hopper 6 reaches the retracted position. In the interference preventing constructions Nos. 2 through 11 that will be discussed below, the setting of the operative timing of the drive means for the hopper 6 possesses a corresponding degree of freedom as long as interference between the gas injection nozzle 4 and hopper 6 is avoided.

In accordance with the construction described above that prevents interference between the hopper 6 and gas injection nozzles 4, during the filling of the bag with the material to be packaged 19, the insertion portion 16 of the gas injection nozzle 4 can be placed substantially in the center of the bag 5 in top plan view as well as placed substantially in the center of the hopper 6. In addition, it is also possible that the dispensing opening 15 of the gas injection nozzle 4 is positioned in the vicinity of the bottom of the bag 5. The position (which is substantially in the center of a bag) of the insertion portion 16 and the position (which is in the vicinity of the bottom of the bag) of the dispensing openings 15 5 are ideal for gas exchange in the bags 5 and makes it possible to obtain a high gas exchange rate.

In the interference preventing constructions Nos. 2 through 11, the top plan view position of the hopper 6 and gas injection nozzles 4 inside the bags 5 as well as the depth of insertion of the gas injection nozzles 4 can be set in the same manner as described above.

### Second Interference Preventing Construction

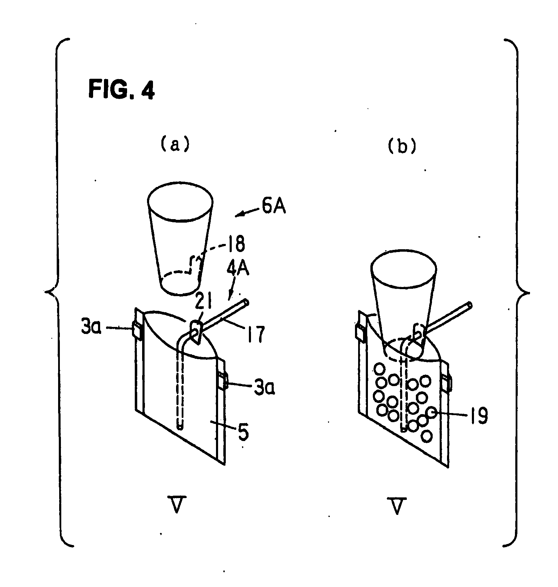

The second gas injection nozzle/hopper interference preventing construction in the present invention will be described below with reference to FIG. 4. The gas injection nozzle and hopper illustrated in FIG. 4 are used in the rotary bag filling and packaging apparatus illustrated in FIG. 1 and used instead of the gas injection nozzle 4 and hopper 6 shown in FIGs. 2 and 3. In the same manner as in FIG. 3, FIG. 4 illustrates a gas injection nozzle 4A in stop position V and a stationary hopper 6A in stop position V.

In the construction of FIG. 4, the construction of the hopper 6A and timing of its raising and lowering motions are basically the same as those of the hopper 6 in FIGs. 2 and 3. On the other hand, the gas injection nozzle 4A of this second interference preventing construction is different from that of the gas injection nozzle 4 described in FIGs. 2 and 3 only in that a flange cover member 21 corresponding to the cutout portion 18 of the hopper 6A is secured to the extension portion 17 of the gas injection nozzle 4. The cover member 21 generally blocks the cutout portion 18 when the hopper 6A is lowered and stops in the in-bag inserted position (filling position). In other words, when the hopper 6A arrives at the filling position, the cover member 21 forms a part of the side wall of the hopper 6A. When the bag is filled, the material to be packaged 19 can be prevented from spilling outside from the cutout portion 18 by the cover member 21.

### Third Interference Preventing Construction

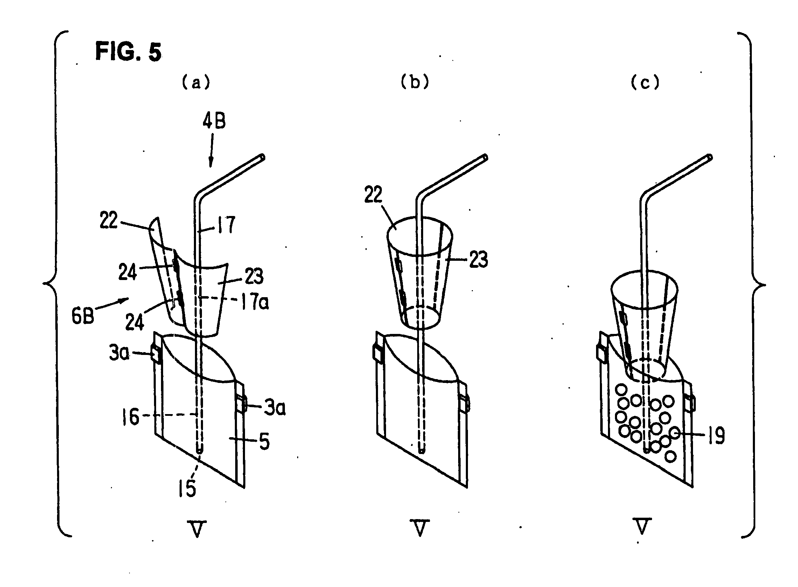

The third gas injection nozzle/hopper interference preventing construction in the present invention will be described below with reference to FIG. 5. The gas injection nozzle and hopper illustrated in FIG. 5 are used in the rotary bag filling and packaging apparatus illustrated in FIG. 1 and used instead of the gas injection nozzle 4 and hopper 6 shown in FIGs. 2 and 3. In the same manner as in FIG. 3, FIG. 5 illustrates a gas injection nozzle 4B in stop position V and a stationary hopper 6B in stop position V.

In the construction of FIG. 5, the gas injection nozzle 4B has a dispensing opening 15 at the lower end thereof and includes a generally vertical insertion portion 16, which is inserted into a bag 5 when lowered, and an extension portion 17 above the insertion portion 16. The extension portion 17 has a generally vertical portion 17a that is an extension of the insertion portion 16. The length of the vertical portion 17a is set such that it is at least longer than the length of the hopper 6B.

The hopper 6B is comprised of two vertically split (or axially separable) hopper portions 22 and 23 that can be separated and joined. The hopper portions 22 and 23 are linked by hinges 24 such that they can be freely opened and closed. Though FIG. 5 shows two hinges 24, only one hinge can be employed to connect the two hopper portions 22 and 23. The hinges 24 are positioned on the side opposite to the center of the travel path of the gas injection nozzles 4B (or on the center of rotation side of the table 2). A first drive means, not shown, raises and lowers the hopper 6B between a raised position (retracted position) and a lower in-bag inserted position (filling position) at a predetermined timing, and a second drive means, also not shown, separates and joins the two hopper portions 22 and 23 at a predetermined timing.

As shown in FIG. 5(a), when the two hopper portions 22 and 23 of the hopper 6B are separated (they are separated only when the hopper 6B is in the retracted position), the two hopper portions 22 and 23 are outwardly opened by rotating on the axes (pivots) of the hinges 24 (or on the axis (pivot) of the hinge 24) and the hopper 6B is retracted from the travel path of the gas injection nozzle 4B, thus avoiding interference with the intermittently traveling gas injection nozzle 4B. On the other hand, as shown in FIG. 5(b), when the two hopper portions 22 and 23 are joined, the two hopper portions 22 and 23 are closed by rotating on the axes of the hinges 24 and form a cylinder (to make a cylindrical hopper 6B), enclosing therein the gas injection nozzle 4B stopped in stop position V.

The manner of operation of the hopper 6B will be described below referring to FIG. 5. When a bag 5, whose side edges are gripped by a gripper 3 (only a pair of gripping portions 3a and 3a is shown in the figure) is transported to stop position V and a gas injection nozzle 4B inserted into the bag 5 is moved simultaneously therewith, the hopper 6B is in the retracted position and the hopper portions 22 and 23 are separated. Thus, the hopper 6B is retracted from the transport path of the bag 5 and from the travel path of the gas injection nozzle 4B (FIG. 5(a)). After the bag 5 and gas injection nozzle 4B stop in stop position V, the second drive means is actuated to join the hopper portions 22 and 23 and form a cylinder (to make a cylindrical hopper 6B), thus enclosing therein the gas injection nozzle 4B (FIG. 5(b)). Subsequently, the first drive means is actuated and the hopper 6B is lowered, stopping in the filling position, after which the bag 5 is loaded and filled with the material to be packaged 19 via the hopper 6B (FIG. 5(c)).

After filling the bag with the material to be packaged 19, the first drive means is actuated to raise the hopper 6B, pulling it out of the bag 5 to the retracting position, and then the second drive means is actuated to separate the hopper portions 22 and 23, and the hopper 6B is retracted from the transport path of the bag 5 and from the travel path of the gas injection nozzle 4B. Subsequently, the bag 5 and gas injection nozzle 4B initiate movement toward the next stop position VI.

It should be noted that if interference between the gas injection nozzle 4B and hopper 6B can be avoided, the operative timing of the first and second drive means is not limited to the one described above. In other words, for example, the operative timing of the second drive means can be set such that the hopper portions 22 and 23 start closing before the gas injection nozzle 4B stops in stop position V and such that the gas injection nozzle 4B starts moving towards the next stop position VI before the hopper portions 22 and 23 are completely separated.

### Fourth Interference Preventing Construction

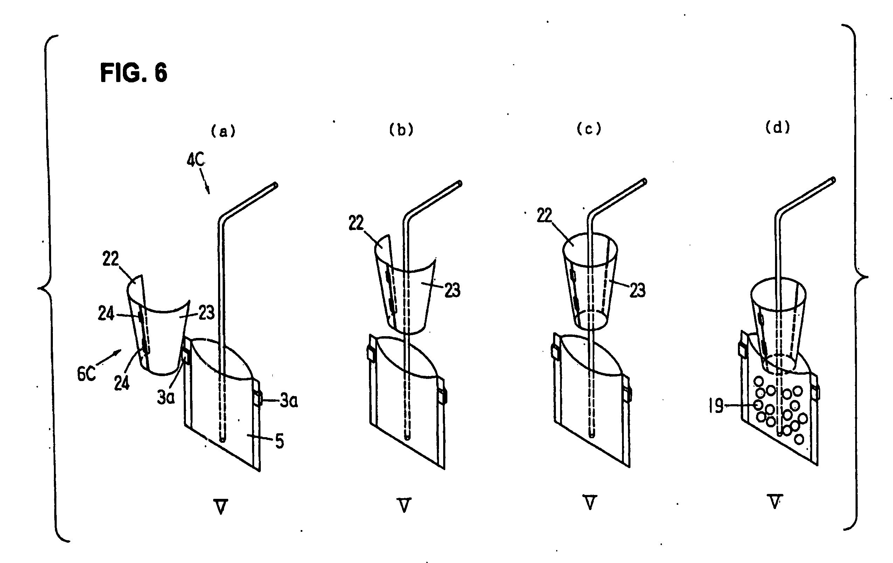

The fourth gas injection nozzle/hopper interference preventing construction in the present invention will be described below with reference to FIG. 6. The gas injection nozzle and hopper illustrated in FIG. 6 are used in the rotary bag filling and packaging apparatus illustrated in FIG. 1 and used instead in the gas injection nozzle 4 and hopper 6 shown in FIGs. 2 and 3. In the same manner as in FIG. 3, FIG. 6 illustrates a gas injection nozzle 4C in stop position V and a stationary hopper 6C disposed in stop position V.

The gas injection nozzle 4C is identical to the gas injection nozzle 4B illustrated in FIG. 5. In addition, the hopper 6C, which is identical to the hopper 6B illustrated in FIG. 5, is comprised of two vertically split hopper portions 22 and 23 and hinges 24 that connect them. However, the mode of travel of the hopper 6C is different from that of the hopper 6B. In other words, in addition to raising and lowering the hopper 6C using a first drive means, not shown, and separating/joining the two hopper portions 22 and 23 using a second drive means, not shown, the hopper 6C is advanced and retracted within a horizontal plane between an advanced position and a retracted position in a direction normal to or at right angles with respect to the travel path of the gas injection nozzle 4C by a third drive means, not shown.

As shown in FIG. 6(a), when the two hopper portions 22 and 23 are separated and the hopper 6C retreats to the retracted position, the hopper portions 22 and 23 are retracted from the travel path of the gas injection nozzle 4C, thus avoiding interference between the hopper 6C and gas injection nozzle 4C.

The manner of operation of the hopper 6C will be described referring to FIG. 6. When a bag 5, whose side edges are gripped by a gripper 3 (only a pair of gripping portions 3a and 3a is shown in the figure) is transported to stop position V and a gas injection nozzle 4C inserted into the bag 5 is moved simultaneously therewith, the hopper 6C retreats to the retracted position with the hopper portions 22 and 23 separated, such that the hopper 6C is retracted from the transport path of the bag 5 and from the travel path of the gas injection nozzle 4C (FIG. 6(a)). When the bag 5 and gas injection nozzle 4C stop in stop position V, the third drive means is actuated to move the hopper 6C to the advanced position (FIG. 6(b)). Next, the second drive means is actuated to join the hopper portions 22 and 23 and form a cylinder (to make a cylindrical hopper 6C), thereby enclosing therein the gas injection nozzle 4C (FIG. 6(c)). Subsequently, the first drive means is actuated and the hopper 6C is lowered, stopping in the in-bag inserted position (filling position), after which the bag 5 is loaded and filled with the material to be packaged 19 via hopper 6C (FIG. 6(d)).

After filling the bag with the material to be packaged 19, the first drive means is actuated to raise the hopper 6C, pulling it out of the bag 5 (at such time, the hopper 6C is retracted from the transport path of the bag 5, but not from the travel path of the gas injection nozzle 4C) and, in the raised position (identical to the advanced position), the second drive means is actuated to separate the hopper portions 22 and 23, at which time the hopper 6C can be retracted without interference with the gas injection nozzle 4C. Furthermore, the third drive means is actuated, causing the hopper 6C to retreat to the retracted position, and as a result, the hopper 6C is also retracted from the travel path of the gas injection nozzle 4C. Subsequently, the bag 5 and gas injection nozzle 4C initiate movement toward the next stop position VI.

It should be noted that as long as interference between the gas injection nozzle 4C and hopper 6C can be avoided, the operative timing of the drive means 1 through 3 is not limited to the one described above. In other words, for example, the operative timing of the third drive means can be set such that the hopper 6C starts advancing before the gas injection nozzle 4C stops in stop position V and such that the gas injection nozzle 4C starts moving towards the next stop position VI before the hopper 6C reaches the retracted position.

### Fifth Interference Preventing Construction

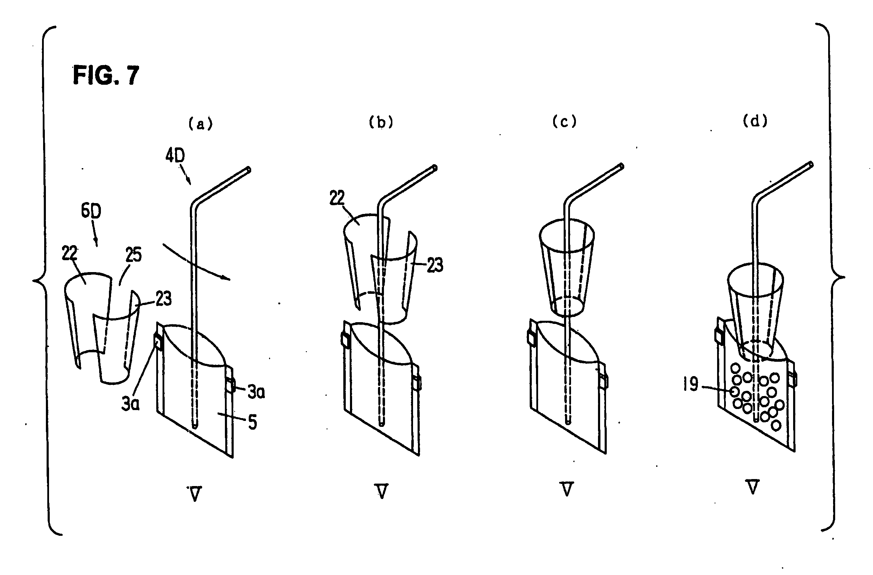

The fifth gas injection nozzle/hopper interference preventing construction in the present invention will be described with reference to FIG. 7. The gas injection nozzle and hopper illustrated in FIG. 7 are used in the rotary bag filling and packaging apparatus illustrated in FIG. 1 and used instead of the gas injection nozzle 4 and hopper 6 shown in FIGs. 2 and 3. In the same manner as in FIG. 3, FIG. 7 illustrates a gas injection nozzle 4D in stop position V and a stationary hopper 6D disposed in stop position V.

The gas injection nozzle 4D is identical to the gas injection nozzle 4C illustrated in FIG. 6. While the hopper 6D in FIG. 7 is comprised of two vertically split hopper portions 22 and 23 that can be separated and joined in the same manner as the hopper 6C illustrated in FIG. 6, it is different from the hopper 6C in that the two hopper portions 22 and 23 are not linked by hinges 24 (see FIG. 6). Instead, the hopper portions 22 and 23 of the hopper 6D are arranged on the upstream and on the downstream in the direction of travel of the gas injection nozzle 4D (see arrow in FIG. 7(a)). When the hopper portions 22 and 23 are separated horizontally, a gap is formed therebetween so that the gas injection nozzle 4D is allowed to pass therethrough.

A first drive means, not shown, raises and lowers the hopper 6D between a raised position and a lower in-bag inserted position (filling position) at a predetermined timing. A second drive means, not shown, separates and joins the two hopper portions 22 and 23 in the direction of travel of the gas injection nozzle 4D at a predetermined timing. A third drive means, not shown, causes the hopper 6D to advance and retreat at a predetermined timing within a horizontal plane between an advanced position (identical to the raised position) and a retracted position in a direction normal to or at right angles with respect to the travel path shown by arrow in FIG. 7(a) of the gas injection nozzle 4D.

The manner of operation of the hopper 6D will be described below referring to FIG. 7. When a bag 5, whose side edges are gripped by a gripper 3 (only a pair of gripping portions 3a and 3a is shown in the figure) is transported to stop position V and a gas injection nozzle 4D inserted into the bag 5 is moved simultaneously therewith, the hopper 6D retreats to the retracted position, with the hopper portions 22 and 23 separated, such that the hopper is retracted from the transport path of the bag 5 and from the travel path of the gas injection nozzle 4D (FIG. 7(a)).

When the bag 5 and gas injection nozzle 4D stop in stop position V, the third drive means is actuated to advance the hopper 6D. In this advance movement of the hopper 6D, the gas injection nozzle 4D passes through the gap 25 between the separated hopper portions 22 and 23, so that the hopper 6D arrives at the advanced position without causing interference with the gas injection nozzle 4D (FIG. 7(b)). Next, the second drive means is actuated to join the hopper portions 22 and 23 and form a cylinder (to make a cylindrical hopper 6D), thereby enclosing therein the gas injection nozzle 4D (FIG. 7(c)). Subsequently, the first drive means is actuated and the hopper 6D is lowered, stopping in the filling position, after which the bag 5 is loaded and filled with the material to be packaged 19 via the hopper 6D (FIG. 7(d)).

After filling the bag with the material to be packaged 19, the first drive means is actuated to raise the hopper 6D, pulling it out of the bag 5 (at such time, the hopper 6D is retracted from the transport path of the bag 5, but not from the travel path of the gas injection nozzle 4D) and, in the raised position (identical to the advanced position), the second drive means is actuated to separate the hopper portions 22 and 23, thereby making it possible for the hopper 6D to be retracted without interference with the gas injection nozzle 4D. Furthermore, the third drive means is actuated, causing the hopper 6D to retreat to the retracted position, and as a result the hopper 6D is also retracted from the travel path of the gas injection nozzle 4D. Subsequently, the bag 5 and gas injection nozzle 4D initiate movement toward the next stop position VI.

It should be noted that as long as interference between the gas injection nozzle 4D and hopper 6D can be avoided, the operative timing of the drive means 1 through 3 is not limited to the one described above. In other words, for example, the operative timing of the third drive means can be set such that the hopper 6D starts advancing before the gas injection nozzle 4D stops in stop position V and such that the gas injection nozzle 4D starts moving towards the next stop position VI before the hopper 6D reaches the retracted position.

### Sixth Interference Preventing Construction

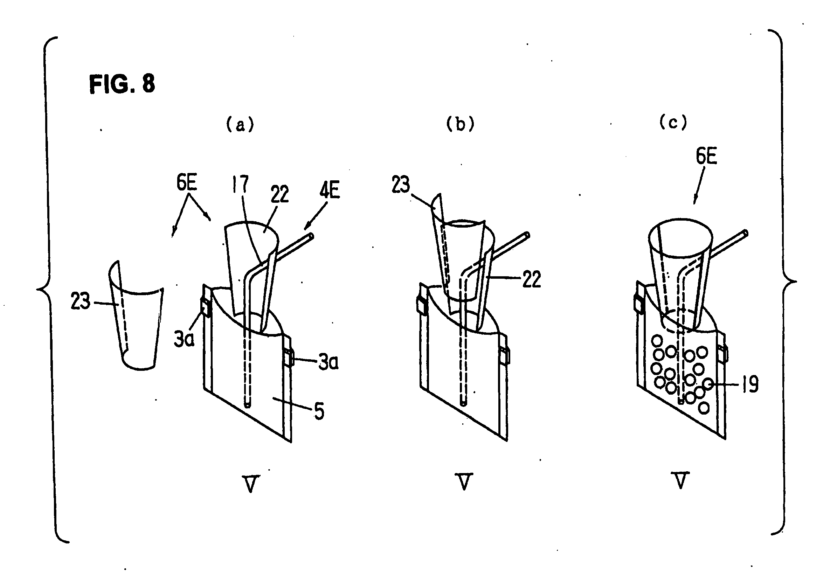

The sixth gas injection nozzle/hopper interference preventing construction in the present invention will be described with reference to FIG. 8. The gas injection nozzle and hopper illustrated in FIG. 8 are used in the rotary bag filling and packaging apparatus illustrated in FIG. 1 and used instead of the gas injection nozzle 4 and hopper 6 shown in FIGs. 2 and 3. In the same manner as in FIG. 3, FIG. 8 illustrates a hopper 6E and a gas injection nozzle 4E in stop position V.

It should be noted that, as will be described below, one of the hopper portions, 22, which forms part of the hopper 6E, is provided in the same number (quantity-wise) as the gas injection nozzle 4E and is secured to each gas injection nozzle 4E, and as a result the hopper portion 22 is raised and lowered and intermittently moved along with the nozzle 4E. However, the other hopper portion 23 is provided in stop position V and the cylindrical hopper 6E is formed only when the two hopper portions 22 and 23 are joined in stop position V. Accordingly, this hopper 6E can be called a stationary type hopper.

The extension portion 17 of the gas injection nozzle 4E is bent. The hopper 6E, which is identical to the hopper 6D illustrated in FIG. 7, is comprised of two vertically split hopper portions 22 and 23 that can be separated and joined. Unlike the hopper 6D, the hopper portions 22 and 23 are arranged radially inside and outside of the travel path of the gas injection nozzle 4D and, in addition, one the hopper portions, 22, is secured at a location extended in the transverse direction (in the direction of the center of the table 2) of the extension portion 17 of the gas injection nozzles 4E (the extension portion 17 of the gas injection nozzle 4E goes through the side wall of the hopper portion 22).

A first drive means, not shown, raises and lowers the other hopper portion 23 between a raised position and a lower in-bag inserted position (filling position) at a predetermined timing, while a second drive means, also not shown, causes the other hopper portion 23 to advance and retreat within a substantially horizontal plane between an advanced position and a retracted position in a direction normal to or at right angles with respect to the travel path of the gas injection nozzle 4E at a predetermined timing. In the retracted position, the hopper portion 23 is retracted from the travel path of the gas injection nozzle 4E, and in the advanced position, it is joined with the other hopper portion 22, thus forming a cylindrical hopper 6E that encloses therein the gas injection nozzle 4E therein.

The manner of operation of the hopper 6E will be described below referring to FIG. 8. When a bag 5, whose side edges are gripped by a gripper 3 (only a pair of gripping portions 3a and 3a is shown in the figure), is transported to stop position V and a gas injection nozzle 4E inserted into the bag 5 is moved simultaneously therewith to the stop position V (so that the hopper portion 22 provided on the gas injection nozzle 4E is also moved with the lower end thereof inside the bag 5), the hopper portion 23 is in the retracted position and separated from the hopper portion 22 (FIG. 8(a)).

When the bag 5 and gas injection nozzle 4E stop in stop position V, the second drive means is actuated to move the hopper portion 23 to the advanced position. Although at such time the hopper portion 23 is joined to the hopper portion 22 to form the cylindrical hopper 6E and enclosing therein the gas injection nozzle 4E, the height of the hopper portion 23 and hopper portion 22 is different and at such time the structure of the hopper 6E is incomplete (FIG. 8(b)). Subsequently, the first drive means is actuated to lower the hopper portion 23, stopping in the filling position, at this time the structure of the hopper 6E is completed (forming an inverted truncated cone shape). Next, the bag 5 is loaded and filled with the material to be packaged 19 via the hopper 6E (FIG. 8(c)).

After filling the bag with the material to be packaged 19, the first drive means is actuated to raise the hopper portion 23, pulling it out of the bag 5 (at such time, the hopper portion 23 is retracted from the transport path of the bag 5, but not from the travel path of the gas injection nozzle 4E) and, in the raised position (identical to the advanced position), the second drive means is actuated to separate the hopper portion 23 from the hopper portion 22 and retract it to the retracted position, and as a result the hopper portion 23 is retracted from the travel path of the gas injection nozzle 4E. Subsequently, the bag 5 and gas injection nozzle 4E initiate movement toward the next stop position VI.

It should be noted that as long as interference between the gas injection nozzle 4E and hopper 6E can be avoided, the operative timing of the drive means 1 and 2 is not limited to the one described above. In other words, for example, the operative timing of the second drive means can be set such that the hopper portion 23 starts advancing before the gas injection nozzle 4E stops in stop position V and such that the gas injection nozzle 4E starts moving towards the next stop position VI before the hopper portion 23 reaches the retracted position.

### Seventh Interference Preventing Construction

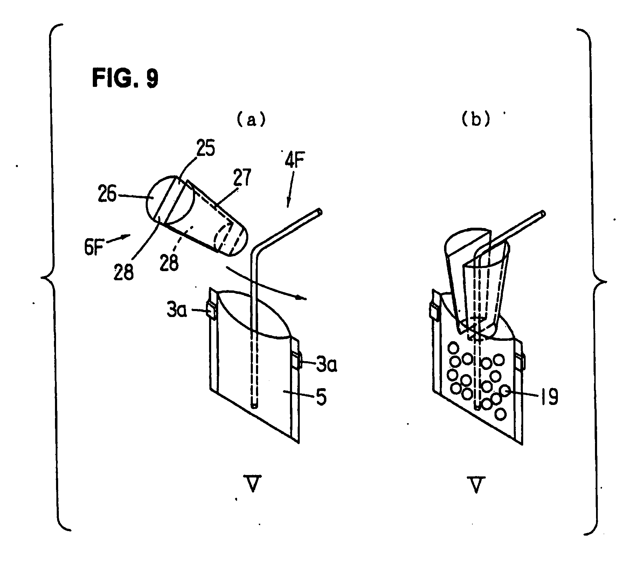

The seventh gas injection nozzle/hopper interference preventing construction in the present invention will be described with reference to FIG. 9. The gas injection nozzle and hopper illustrated in FIG. 9 are used in the rotary bag filling and packaging apparatus illustrated in FIG. 1 and used instead of the gas injection nozzle 4 and hopper 6 shown in FIGs. 2 and 3. In the same manner as in FIG. 3, FIG. 9 illustrates a gas injection nozzle 4F in stop position V and a stationary hopper 6F disposed in stop position V.

The gas injection nozzle 4F is substantially identical to the gas injection nozzle 4E illustrated in FIG. 8. The hopper 6F is comprised of two sub-hoppers 26 and 27 arranged symmetrically, with a gap of a predetermined width provided therebetween, on the upstream side and on the downstream side in the direction of travel of the gas injection nozzle 4F (see arrow in FIG. 9(a)). Each one of the sub-hoppers 26 and 27 has a cylindrical side wall that is generally semi-circular in cross section and a flat wall 28 that is arranged to face the flat wall 28 of the other sub-hopper, and a gap 25 is formed between the pair of sub-hoppers 26 and 27. The gap 25 has a width sufficient to receive the gas injection nozzle 4F.

A drive means, not shown, rotates in a vertical direction the hopper 6F within a plane normal to or at right angles with respect to the travel path of the gas injection nozzle 4F, with the fulcrum for rotation located outside of the travel path, between an in-bag inserted position (filling position) and a retracted position at a predetermined timing. While the hopper 6F is rotated along a longitudinally plane, the flat walls 28 remain parallel to a plane normal to or at right angles with respect to the travel path of the gas injection nozzle 4F at all times.

The manner of operation of the hopper 6F will be described below referring to FIG. 9. When a bag 5, whose side edges are gripped by a gripper 3 (only a pair of gripping portions 3a and 3a is shown in the figure) is transported to stop position V and a gas injection nozzle 4F inserted into the bag 5 is moved simultaneously therewith, the hopper 6F retreats to the retracted position and is retracted from the transport path of the bag 5 and from the travel path of the gas injection nozzle 4F (FIG. 9(a)). When the bag 5 and gas injection nozzle 4F stop in stop position V, the drive means is actuated to downwardly swing the hopper 6F. During the downward swing, the gas injection nozzle 4F enters the gap 25, and the hopper 6F reaches the filling position without interfering with the gas injection nozzle 4F. When the hopper 6F reaches the filling position, the bag 5 is loaded and filled with the material to be packaged 19 via the hopper 6F (more specifically via each of the sub-hoppers 26 and 27) (FIG. 9(b)).

After filling the bag 5 with the material to be packaged 19, the drive means is actuated to swing back the hopper 6F upwards, pulling it out of the bag 5 (at such time the hopper 6F is retracted from the transport path of the bag 5, but not from the travel path of the gas injection nozzle 4F) and away from the gas injection nozzle 4F to the retracted position, and as a result the hopper 6F is retracted from the travel path of the gas injection nozzle 4F. Subsequently, the bag 5 and gas injection nozzle 4F initiate movement toward the next stop position VI.

It should be noted that as long as interference between the gas injection nozzle 4F and hopper 6F can be avoided, the operative timing of the drive means is not limited to the one described above. In other words, for example, the operative timing of the drive means can be set such that the hopper 6F starts the downward swing before the gas injection nozzle 4F stops in stop position V and such that the gas injection nozzle 4F starts moving towards the next stop position VI before the hopper 6F reaches the retracted position.

### Eighth Interference Preventing Construction

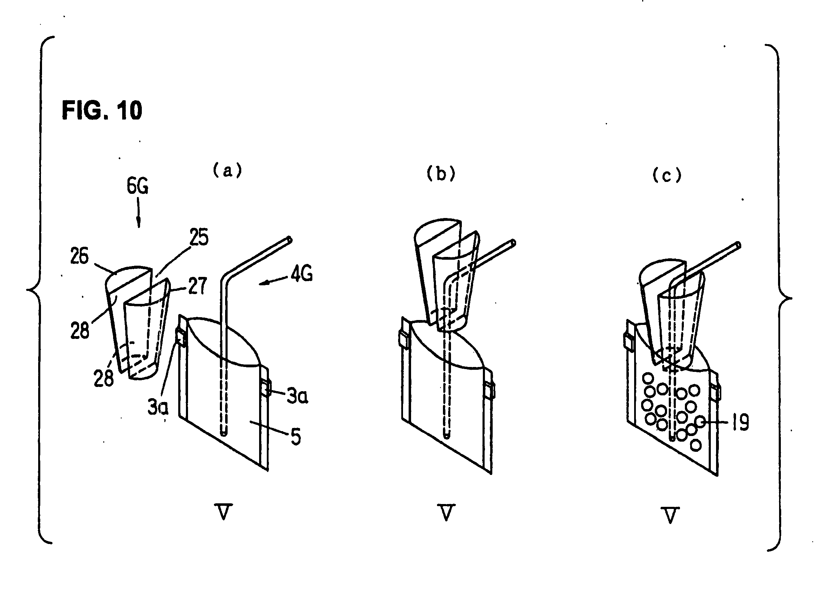

The eighth gas injection nozzle/hopper interference preventing construction in the present invention will be described with reference to FIG. 10. The gas injection nozzle and hopper illustrated in FIG. 10 are used in the rotary bag filling and packaging apparatus illustrated in FIG. 1 and used instead of the gas injection nozzle 4 and hopper 6 shown in FIGs. 2 and 3. In the same manner as in FIG. 3, FIG. 10 illustrates a gas injection nozzle 4G in stop position V and a stationary hopper 6G disposed in stop position V.

The gas injection nozzle 4G is identical to the gas injection nozzle 4F illustrated in FIG. 9. However, the hopper 6G does not travel between a retracted position and an in-bag inserted position (filling position) in a single step involving a vertical swing, though the hopper 6F illustrated in FIG. 9 does, and the hopper 6G differs from the hopper 6F in that it performs the travel in two steps. In other respects, the hopper 6G is identical to the hopper 6F. Also similar is the fact that, when the hopper 6G travels, the gas injection nozzle 4G enters the gap 25 between two sub-hoppers 26 and 27, thus preventing interference between the two.

More specifically, a first drive means, not shown, raises and lowers the hopper 6G between a raised position and a lower in-bag inserted position (filling position) at a predetermined timing, and a second drive means, also not shown, causes the hopper 6G to advance and retreat within a substantially horizontal plane between an advanced position (identical to the raised position) and retracted position at a predetermined timing. It should be noted that the raising/lowering and advancing/retracting of the hopper 6G is performed within a plane perpendicular to or at right angles with respect to the travel path of the gas injection nozzle 4G.

The manner of operation of the hopper 6G will be described below referring to FIG. 10. When a bag 5, whose side edges are gripped by a gripper 3 (only a pair of gripping portions 3a and 3a is shown in the figure) is transported to stop position V and a gas injection nozzle 4G inserted into the bag 5 is moved simultaneously therewith, the hopper 6G retreats to the retracted position and is retracted from the transport path of the bag 5 and from the travel path of the gas injection nozzle 4G (FIG. 10(a)). When the bag 5 and gas injection nozzle 4G stop in stop position V, the second drive means is actuated to move the hopper 6G to the advanced position (FIG. 10(b)), and then the first drive means is actuated to lower the hopper 6G. When the hopper 6G reaches the filling position, the bag 5 is loaded and filled with the material to be packaged 19 via the hopper 6G (more specifically via each of the sub-hoppers 26 and 27) (FIG. 10(c)).

After filling the bag with the material to be packaged 19, the first drive means is actuated to raise the hopper 6G, pulling it out of the bag 5 (at such time the hopper 6G is retracted from the transport path of the bag 5, but not from the travel path of the gas injection nozzle 4G) and bringing it to the raised position. Subsequently, the second drive means is actuated, causing the hopper 6G to retreat to the retracted position, and as a result the hopper 6G is also retracted from the travel path of the gas injection nozzle 4G. The bag 5 and gas injection nozzle 4G thereafter initiate movement toward the next stop position VI.

It should be noted that as long as interference between the gas injection nozzle 4G and hopper 6G can be avoided, the operative timing of the drive means is not limited to the one described above. In other words, for example, the operative timing of the drive means can be set such that the hopper 6G starts advancing before the gas injection nozzle 4G stops in stop position V and such that the gas injection nozzle 4G starts moving towards the next stop position VI before the hopper 6G reaches the retracted position.

### Ninth Interference Preventing Construction

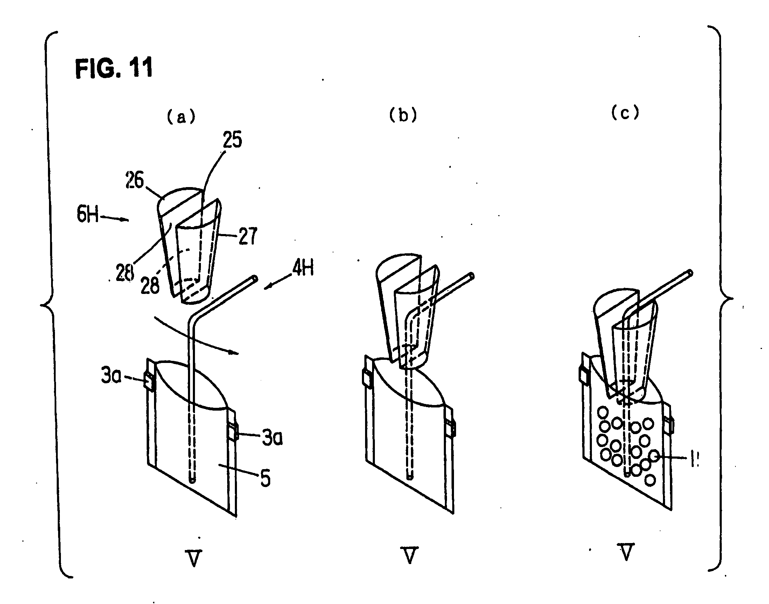

The ninth gas injection nozzle/hopper interference preventing construction in the present invention will be described with reference to FIG. 11. The gas injection nozzle and hopper illustrated in FIG. 11 are used in the rotary bag filling and packaging apparatus illustrated in FIG. 1 and used instead of the gas injection nozzle 4 and hopper 6 shown in FIGs. 2 and 3. In the same manner as in FIG. 3, FIG. 11 illustrates a gas injection nozzle 4H in stop position V and a stationary hopper 6H disposed in stop position V.

The gas injection nozzle 4H is identical to the gas injection nozzle 4F illustrated in FIG. 9. The hopper 6H does not travel between a retracted position and an in-bag inserted position (filling position) by swinging in a vertical direction in the same manner though the hopper 6F illustrated in FIG. 9 does, and the hopper 6H differs from the hopper 6F only in that it travels simply by being raised and lowered in a vertical direction. In other respects, the hopper 6H is identical to the hopper 6F. Also similar is the fact that, when the hopper 6H travels, the gas injection nozzle 4H enters the gap 25 between the sub-hoppers 26 and 27, thus preventing interference between the hopper 6H and the gas injection nozzle 4H.

The manner of operation of the hopper 6H will be described below referring to FIG. 11. When a bag 5, whose side edges are gripped by a gripper 3 (only a pair of gripping portions 3a and 3a is shown in the figure) is transported to stop position V and a gas injection nozzle 4H inserted into the bag 5 is moved simultaneously therewith, the hopper 6H is raised to the retracted position and is retracted from the transport path of the bag 5, as well as from the travel path of the gas injection nozzle 4H (FIG. 11(a)). When the bag 5 and gas injection nozzle 4H stop in stop position V, a drive means, not shown, is actuated to vertically lower the hopper 6H (FIG. 11 (b)). As it is lowered, the gas injection nozzle 4H enters the gap 25 between the sub-hoppers 26 and 27, and the hopper 6H reaches the filling position without interfering with the gas injection nozzle 4H. When the hopper 6H reaches the filling position, the bag 5 is loaded and filled with the material to be packaged 19 via the hopper 6H (more specifically via each of the sub-hoppers 26 and 27) (FIG. 11(c)).

After filling the bag with the material to be packaged 19, the drive means is actuated to raise the hopper 6H, pulling it out of the bag 5 (at such time the hopper 6H is retracted from the transport path of the bag 5, but not from the travel path of the gas injection nozzle 4H) and subsequently bringing it to the raised position (retracted position), and as a result, the hopper 6H is also retracted from the travel path of the gas injection nozzle 4H. Subsequently, the bag 5 and gas injection nozzle 4H initiate movement toward the next stop position VI.

It should be noted that as long as interference between the gas injection nozzle 4H and hopper 6H can be avoided, the operative timing of the drive means is not limited to the one described above. In other words, for example, the operative timing of the drive means can be set such that the hopper 6H starts the descent movement before the gas injection nozzle 4H stops in stop position V and such that the gas injection nozzle 4H starts moving towards the next stop position VI before the hopper 6H reaches the retracted position.

### Tenth Interference Preventing Construction

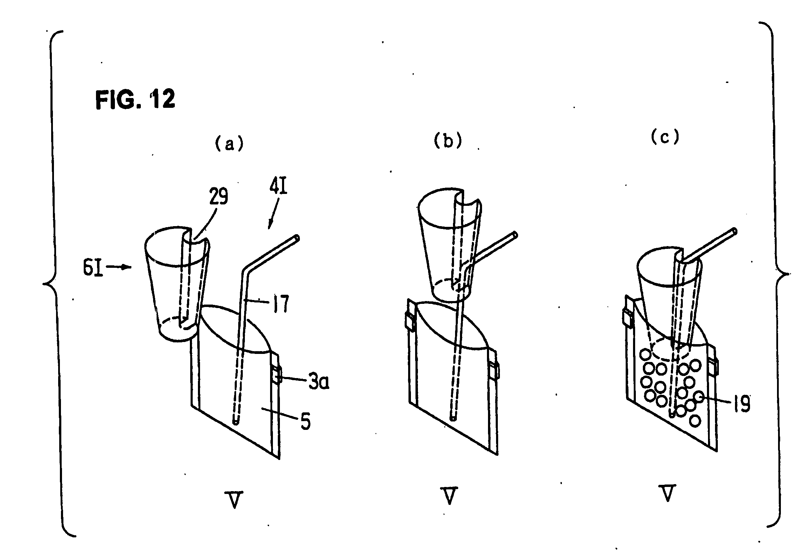

The tenth gas injection nozzle/hopper interference preventing construction in the present invention will be described with reference to FIG. 12. The gas injection nozzle and hopper illustrated in FIG. 12 are used in the rotary bag filling and packaging apparatus illustrated in FIG. 1 and used instead of the gas injection nozzle 4 and hopper 6 shown in FIGs. 2 and 3. In the same manner as in FIG. 3, FIG. 12 illustrates a gas injection nozzle 41 in stop position V and a stationary hopper 61 disposed in stop position V.

The gas injection nozzle 41 is identical to the gas injection nozzle 4H illustrated in FIG. 11. The hopper 61 has a side wall that is basically of an inverted truncated conical shape and a vertically extending concave groove 29 of a predetermined depth (or height) is formed in a part of the side wall that faces the center of the travel path of the gas injection nozzle 41 (on the side facing the center of the table 2). This concave groove 29 has a width and depth sufficient for entry of the gas injection nozzle 41 up to the center of the hopper 61.

A first drive means, not shown, vertically raises and lowers the hopper 61 between a raised position and a lower in-bag inserted position (filling position) at a predetermined timing, and a second drive means, also not shown, causes the hopper 61 to advance and retreat within a substantially horizontal plane between an advanced position (identical to the raised position) and retracted position at a predetermined timing. It should be noted that the raising/lowering and advancing/retracting of the hopper 61 is performed within a plane perpendicular to the travel path of the gas injection nozzle 41.

The manner of operation of the hopper 61 will be described below referring to FIG. 12. When a bag 5, whose side edges are gripped by a gripper 3 (only a pair of gripping portions 3a and 3a is shown in the figure) is transported to stop position V and a gas injection nozzle 41 inserted into the bag 5 is moved simultaneously therewith, the hopper 61 retreats to the retracted position and is retracted from the transport path of the bag 5 as well as from the travel path of the gas injection nozzle 41 (FIG. 12(a)). When the bag 5 and gas injection nozzle 41 stop in stop position V, the second drive means is actuated to move the hopper 61 to the advanced position, so that the extension portion 17 of the gas injection nozzle 41 enters the concave groove 29 (FIG. 12(b)), and then the first drive means is actuated to lower the hopper 61. When the hopper 61 is lowered and reaches the filling position, the bag 5 is loaded and filled with the material to be packaged 19 via the hopper 61 (FIG. 12(c)).

After filling the bag 5 with the material to be packaged 19, the first drive means is actuated to raise the hopper 61, pulling it out of the bag 5 (at such time the hopper 61 is retracted from the transport path of the bag 5, but not from the travel path of the gas injection nozzle 41) and bringing it to the raised position. Subsequently, the second drive means is actuated, causing the hopper 61 to retreat to the retracted position, and as a result the hopper 61 is also retracted from the travel path of the gas injection nozzle 41. Then, the bag 5 and gas injection nozzle 41 initiate movement toward the next stop position VI.

It should be noted that as long as interference between the gas injection nozzle 41 and hopper 61 can be avoided, the operative timing of the drive means is not limited to the one described above. In other words, for example, the operative timing of the second drive means can be set such that the hopper 61 starts advancing before the gas injection nozzle 41 stops in stop position V and such that the gas injection nozzle 41 starts moving towards the next stop position VI before the hopper 61 reaches the retracted position.

### Eleventh Interference Preventing Construction

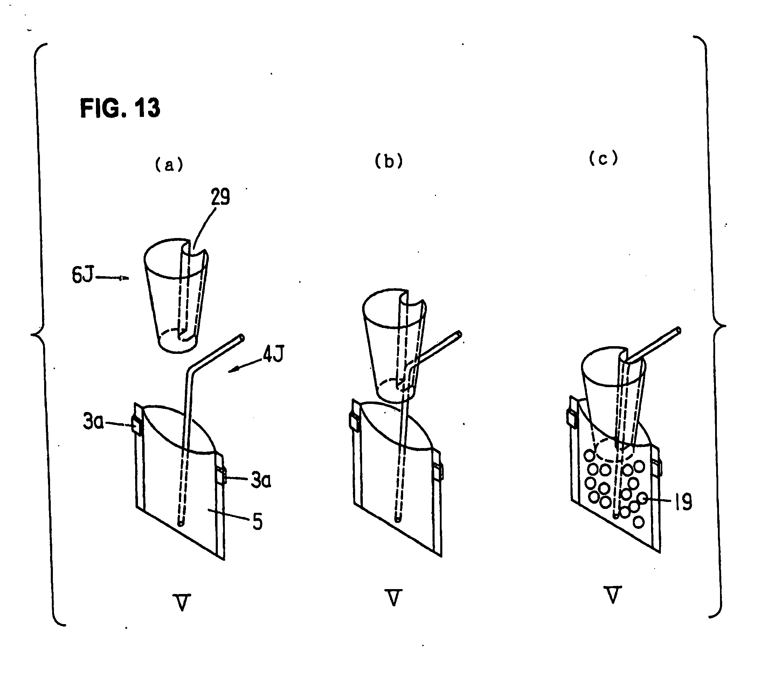

The eleventh gas injection nozzle/hopper interference preventing construction in the present invention will be described with reference to FIG. 13. The gas injection nozzle and hopper illustrated in FIG. 13 are used in the rotary bag filling and packaging apparatus illustrated in FIG. 1 and used instead of the gas injection nozzle 4 and hopper 6 shown in FIGs. 2 and 3. In the same manner as in FIG. 3, FIG. 13 illustrates a gas injection nozzle 4J in stop position V and a stationary hopper 6J disposed in stop position V.

The gas injection nozzle 4J is identical to the gas injection nozzle 41 illustrated in FIG. 12. The hopper 6J does not travel between a retracted position and an in-bag inserted position (filling position) in two steps though the hopper 61 illustrated in FIG. 12 does, and the hopper 6J differs from the hopper 61 only in that it performs the travel in single vertical raising/lowering step. In other respects, the hopper 6J is identical to the hopper 61. Also similar is the fact that, as the hopper 6J travels, the gas injection nozzle 4J enters the concave groove 29, thus preventing interference between the hopper 61 and the nozzle 4J.

The manner of operation of the hopper 6J will be described below referring to FIG. 13. When a bag 5, whose side edges are gripped by a gripper 3 (only a pair of gripping portions 3a and 3a is shown in the figure) is transported to stop position V and a gas injection nozzle 4J inserted into the bag 5 is moved simultaneously therewith, the hopper 6J moves to the upper retracted position (raised position) and is retracted from the transport path of the bag 5 as well as from the travel path of the gas injection nozzle 4J (FIG. 13(a)). When the bag 5 and gas injection nozzle 4J stop in stop position V, the drive means is actuated to vertically lower the hopper 6J (FIG. 13(b)). When the hopper 6J is lowered, the gas injection nozzle 4J enters the concave groove 29 of the hopper 6J, and the hopper 6J reaches the filling position without interfering with the gas injection nozzle 4J. When the hopper 6J reaches the filling position, the bag 5 is loaded and filled with the material to be packaged 19 via the hopper 6J (FIG. 13(c)).

After filling the bag 5 with the material to be packaged 19, the drive means is actuated to raise the hopper 6J, pulling it out of the bag 5 (at such time the hopper 6J is retracted from the transport path of the bag 5, but not from the travel path of the gas injection nozzle 4J) and subsequently bringing it to the retracted position (raised position), and as a result the hopper 6J is also retracted from the travel path of the gas injection nozzle 4J. Subsequently, the bag 5 and gas injection nozzle 4J initiate movement toward the next stop position VI.

It should be noted that as long as interference between the gas injection nozzle 4J and hopper 6J can be avoided, the operative timing of the drive means is not limited to the one described above. In other words, for example, the operative timing of the drive means can be set such that the hopper 6J starts the descent movement before the gas injection nozzle 4J stops in stop position V and such that the gas injection nozzle 4J starts moving towards the next stop position VI before the hopper 6J reaches the retracted position.

The above descriptions of the interference preventing constructions Nos. 1 through 11 are made on applications thereof to a rotary bag filling and packaging apparatus that uses a stationary hopper (a hopper which is disposed in one of the stop positions along the bag transport path). However, the inventive interference preventing constructions described above are equally applicable to a rotary bag filling and packaging apparatus that uses a hopper of tracking type (in which the hopper is provided along the bag transport path so as to be allowed for a reciprocation motion through a predetermined range and a movement made in synchronism with the transport of the bags during forward travel).

In addition, the bag transport path in the rotary bag filling and packaging apparatus described above and to which the above-described interference preventing constructions are employed has a circular shape. However, the interference preventing constructions are equally applicable to a rotary bag filling and packaging apparatus with not a circular annular transport path but with, for instance, a racetrack-shape transport path.

## Claims

1. A rotary bag filling and packaging apparatus (1), comprising:
a plurality of grippers (3) for holding bags (5) and installed at regular intervals along an annular travel path so as to travel intermittently along the annular travel path within a horizontal plane,
a plurality of gas injection nozzles (4) that are respectively installed in association with each one of the grippers, travel along with the grippers intermittently and are raised and lowered at a predetermined timing during the intermittent travel, and
at least one packaging and processing member including a hopper (6) disposed along the travel path;
wherein:
each of the bags is suspended while being gripped at two side edges thereof by each of the plurality of grippers (3),
the bags (5) being gripped are transported intermittently,
each of the plurality of gas injection nozzles (4) is inserted into each of the bags and injects gas therein during the transportation of the bags, and
the bags are filled with material to be packaged via the hopper (6) while gas injection is in progress; and
wherein
the hopper (6B) is comprised of two vertically split hopper portions (22, 23) that are separated and joined at a predetermined timing,
the hopper is raised and lowered at a predetermined timing,
when the two hopper portions are separated, the hopper (6B) is retracted from the travel path of the intermittently traveling gas injection nozzles, and
when the two hopper portions are joined, the hopper takes a cylindrical shape and encloses therein the gas injection nozzle.

2. A rotary bag filling and packaging apparatus, comprising:
a plurality of grippers (3) for holding bags (5) and installed at regular intervals along an annular travel path so as to travel intermittently along the annular travel path within a horizontal plane,
a plurality of gas injection nozzles (4) that are respectively installed in association with each one of the grippers, travel along with the grippers intermittently and are raised and lowered at a predetermined timing during the intermittent travel, and
at least one packaging and processing member including a hopper (6) disposed along the travel path;
wherein:
each of the bags is suspended while being gripped at two side edges thereof by each of the plurality of grippers (3),
the bags being gripped are transported intermittently,
each of the plurality of gas injection nozzles is inserted into each of the bags and injects gas therein during the transportation of the bags, and
the bags are filled with material to be packaged via the hopper while gas injection is in progress; and
wherein
the hopper (6C, 6D) is comprised of two vertically split hopper portions (22, 23) that are separated and joined at a predetermined timing,
the hopper is raised and lowered at a predetermined timing and travels between an advanced position and a retracted position within a substantially horizontal plane such that
when the two hopper portions are separated, the hopper travels while avoiding the gas injection nozzle and, in the retracted position, is retracted from the travel path of the intermittently traveling gas injection nozzles, and
when the two hopper portions are joined in the advanced position, the hopper takes a cylindrical shape and encloses therein the gas injection nozzle.

3. The rotary bag filling and packaging apparatus according to Claim 1, wherein the two hopper portions are connected by a hinge (24) and are separated and joined when opened and closed along an axis of the hinge.

4. The rotary bag filling and packaging apparatus according to Claim 2, wherein the two hopper portions are connected by a hinge (24) and are separated and joined when opened and closed along an axis of the hinge.

5. A rotary bag filling and packaging apparatus, comprising:
a plurality of grippers (3) for holding bags (5) and installed at regular intervals along an annular travel path so as to travel intermittently along the annular travel path within a horizontal plane,
a plurality of gas injection nozzles (4) that are respectively installed in association with each one of the grippers, travel along with the grippers intermittently and are raised and lowered at a predetermined timing during the intermittent travel, and
at least one packaging and processing member including a hopper (6) disposed along the travel path;
wherein:
each of the bags is suspended while being gripped at two side edges thereof by each of the plurality of grippers (3),
the bags being gripped are transported intermittently,
each of the plurality of gas injection nozzles is inserted into each of the bags and injects gas therein during the transportation of the bags, and
the bags are filled with material to be packaged via the hopper while gas injection is in progress; and
wherein
the hopper (6I, 6J) is formed with a concave groove (29) of a predetermined depth extending vertically across a side wall thereof, and
the hopper travels between a filling position and a retracted position at a predetermined timing such that
in the retracted position, the hopper is retracted from the travel path of the intermittently traveling gas injection nozzles, and
in the filling position, the gas injection nozzle is positioned inside the concave groove.

6. A rotary bag filling and packaging apparatus, comprising:
a plurality of grippers (3) for holding bags (5) and installed at regular intervals along an annular travel path so as to travel intermittently along the annular travel path within a horizontal plane,
a plurality of gas injection nozzles (4) that are respectively installed in association with each one of the grippers, travel along with the grippers intermittently and are raised and lowered at a predetermined timing during the intermittent travel, and
at least one packaging and processing member including a hopper (6) disposed along the travel path;
wherein:
each of the bags is suspended while being gripped at two side edges thereof by each of the plurality of grippers,
the bags being gripped are transported intermittently,
each of the plurality of gas injection nozzles is inserted into each of the bags and injects gas therein during the transportation of the bags, and
the bags are filled with material to be packaged via the hopper while gas injection is in progress; and
wherein:
the hopper (6F, 6G, 6H) is comprised of two sub-hoppers (26, 27) disposed with a predetermined gap therebetween, and
the hopper travels between a filling position and a retracted position at a predetermined timing such that
in the retracted position, the hopper is retracted from the travel path of the intermittently traveling gas injection nozzles, and
in the filling position, the gas injection nozzle is positioned in the gap.

7. A rotary bag filling and packaging apparatus comprising:
a plurality of grippers (3) for holding bags (5) and installed at regular intervals along an annular travel path so as to travel intermittently along the annular travel path within a horizontal plane,
a plurality of gas injection nozzles (4) that are respectively installed in association with each one of the grippers, travel along with the grippers intermittently and are raised and lowered at a predetermined timing during the intermittent travel, and
at least one packaging and processing member including a hopper (6) disposed along the travel path;
wherein:
each of the bags is suspended while being gripped at two side edges thereof by each of the plurality of grippers,
the bags being gripped are transported intermittently,
each of the plurality of gas injection nozzles is inserted into each of the bags and injects gas therein during the transportation of the bags, and
the bags are filled with material to be packaged via the hopper while gas injection is in progress; and
wherein:
each of the plurality of gas injection nozzles has a dispensing opening (15) at a lower end thereof and has a substantially vertical insertion portion (16) that is inserted into the bag when lowered and an extended portion (17) that is bent away from an upper end of the insertion portion and extends in a transverse direction;
a cutout portion (18) of a predetermined depth is formed in a side wall of the hopper (6) upwardly from a lower end thereof; and
the hopper is raised and lowered at a predetermined timing such that
when the hopper is raised, the hopper is retracted from the travel path of the intermittently traveling gas injection nozzles, and
when the hopper is lowered, the extended portion (17) of the gas injection nozzle enters the cutout portion (18) of the hopper, and the insertion portion is located inside of the hopper when viewed from above.

8. The rotary bag filling and packaging apparatus according to claim 7, wherein
a flange-shaped cover member (21) corresponding to the cutout portion (18) of the hopper is provided on the extension portion of the gas injection nozzle; and
when the hopper is lowered, the cover member substantially seals the cutout portion and forms part of the side wall of the hopper.

9. A rotary bag filling and packaging apparatus comprising:
a plurality of grippers (3) for holding bags (5) and installed at regular intervals along an annular travel path so as to travel intermittently along the annular travel path within a horizontal plane,
a plurality of gas injection nozzles (4) that are respectively installed in association with each one of the grippers, travel along with the grippers intermittently and are raised and lowered at a predetermined timing during the intermittent travel, and
at least one packaging and processing member including a hopper (6) disposed along the travel path;
wherein:
each of the bags is suspended while being gripped at two side edges thereof by each of the plurality of grippers,
the bags being gripped are transported intermittently,
each of the plurality of gas injection nozzles is inserted into each of the bags and injects gas therein during the transportation of the bags, and
the bags are filled with material to be packaged via the hopper while gas injection is in progress; and
wherein:
the hopper (6E) is comprised of two vertically split first (22) and second (23) hopper portions that are separated and joined at a predetermined timing, has
a first hopper portion (22) is secured to each of the plurality of gas injection nozzles, and
a second hopper portion (23) is raised and lowered at a predetermined timing and travels between an advanced position and a retracted position within a substantially horizontal plane such that
in the retracted position, the second hopper portion is retracted from the travel path of the intermittently traveling gas injection nozzles, and
in the advanced position, the second hopper portion forms the hopper together with the first hopper portion so that the hopper encloses therein the gas injection nozzle.

10. The rotary bag filling and packaging apparatus according to any one of Claims 1 to 9, wherein
the hopper is of a tracking type and reciprocates along a part of a range of a transport path of the bags, and
the hopper, during a forward travel motion thereof, travels in synchronism with a transport of the bags.

11. The rotary bag filling and packaging apparatus according to any one of Claims 1 to 9, wherein the hopper is of a stationary type and provided in a fixed position along a transport path of the bags.

## Patentansprüche

1. Intermittierende Transport-Drehbeutelbefüllungs- und Verpackungsmaschine (1) mit
einer Vielzahl von in regelmäßigen Abständen entlang einer ringförmigen Umlaufbahn so angeordneten Greifern (3) zum Festhalten von Beuteln (5), dass sie in einer horizontalen Ebene intermittierend entlang einer ringförmigen Umlaufbahn laufen,
einer Vielzahl von Gaseinblasdüsen (4), die zusammen mit jedem der Greifer angeordnet sind, mit den Greifern zusammen intermittierend laufen und innerhalb einer vorgegebenen Zeit während des intermittierenden Umlaufs angehoben und abgesenkt werden, und
mindestens einem Verpackungs- und Verarbeitungsglied mit einem entlang der Umlaufbahnbahn angeordneten Fülltrichter (6),
wobei
jeder der Beutel hängend angeordnet ist, während er an zwei seiner Seiten von jedem der Vielzahl der Greifer (3) gegriffen wird,
die gegriffenen Beutel (5) intermittierend gefördert werden,
jede der Vielzahl der Gaseinblasdüsen (4) in jeden der Beutel eingeführt wird und während des Förderns der Beutel Gas einbläst, und
während das Gas eingeblasen wird, die Beutel durch den Fülltrichter (6) mit dem zu verpackenden Material befüllt werden, und
wobei
der Fülltrichter (6B) aus zwei vertikal geteilten Fülltrichterteilen (22, 23) besteht, die innerhalb einer vorgegebenen Zeit getrennt und zusammengesetzt werden,
der Fülltrichter innerhalb einer vorgegebenen Zeit angehoben und abgesenkt wird,
der Fülltrichter (6B) von der Umlaufbahnbahn der intermittierend laufenden Gaseinblasdüsen zurückgezogen wird, wenn die zwei Fülltrichterteile getrennt sind, und
wenn die zwei Fülltrichterteile zusammengesetzt sind, der Fülltrichter zylindrische Form annimmt und die Gaseinblasdüse in sich einschließt.

2. Intermittierende Transport-Drehbeutelbefüllungs- und Verpackungsmaschine mit
einer Vielzahl von in regelmäßigen Abständen entlang einer ringförmigen Umlaufbahn so angeordneten Greifern (3) zum Festhalten von Beuteln (5), dass sie in einer horizontalen Ebene intermittierend entlang der ringförmigen Umlaufbahn laufen,
einer Vielzahl von Gaseinblasdüsen (4), die zusammen mit jedem der Greifer angeordnet sind, mit den Greifern zusammen intermittierend laufen und innerhalb einer vorgegebenen Zeit während des intermittierenden Umlaufs angehoben und abgesenkt werden, und
mindestens einem Verpackungs- und Verarbeitungsglied mit einem entlang der Umlaufbahn angeordneten Fülltrichter (6),
wobei
jeder der Beute hängend angeordnet ist, während er an zwei seiner Seiten von jedem der Vielzahl der Greifer (3) gegriffen wird,
die gegriffenen Beutel (5) intermittierend gefördert werden,
jede der Vielzahl von Gaseinblasdüsen (4) in jeden der Beutel eingeführt wird und während des Förderns der Beutel Gas einbläst, und
während das Gas eingeblasen wird, die Beutel durch den Fülltrichter (6) mit dem zu verpackenden Material befüllt werden, und
wobei
der Fülltrichter (6B) aus zwei vertikal geteilten Fülltrichtern (22, 23) besteht, die innerhalb einer vorgegebenen Zeit getrennt und zusammengesetzt werden,
der Fülltrichter innerhalb einer vorgegebenen Zeit angehoben und abgesenkt wird und zwischen einer vorgeschobenen und einer zurückgezogenen Position in einer im wesentlichen horizontalen Ebene läuft, so dass,
wenn die zwei Fülltrichterteile getrennt sind, der Fülltrichter umläuft, während er die Gaseinblasdüse vermeidet und in der zurückgezogenen Position aus der Umlaufbahn der intermittierend umlaufenden Gaseinblasdüsen zurückgezogen ist, und
wenn die zwei Fülltrichterteile in der vorgeschobenen Position zusammengesetzt sind, der Fülltrichter zylindrische Form annimmt und die Gaseinblasdüse in sich einschließt.

3. Intermittierende Transport-Drehbeutelbefüllungs- und Verpackungsmaschine nach Anspruch 1, wobei die zwei Fülltrichterteile durch ein Scharnier (24) verbunden sind und getrennt und verbunden werden, wenn sie entlang einer Achse des Scharniers geöffnet und geschlossen werden.

4. Intermittierende Transport-Drehbeutelbefüllungs- und Verpackungsmaschine nach Anspruch 2, wobei die zwei Fülltrichterteile durch ein Scharnier (24) verbunden sind und getrennt und verbunden werden wenn sie entlang einer Achse des Scharniers geöffnet und geschlossen werden.

5. Intermittierende Transport-Drehbeutelbefüllungs- und Verpackungsmaschine mit
einer Vielzahl von in regelmäßigen Abständen entlang einer ringförmigen Umlaufbahn so angeordneten Greifern (3) zum Festhalten von Beuteln (5), dass sie in einer horizontalen Ebene intermittierend entlang der ringförmigen Umlaufbahn laufen,
einer Vielzahl von Gaseinblasdüsen (4), die zusammen mit jeweils einem der Greifer angeordnet sind, mit den Greifern zusammen intermittierend laufen und innerhalb einer vorgegebenen Zeit während des intermittierenden Umlaufs angehoben und abgesenkt werden, und mindestens einem Verpackungs- und Verarbeitungsglied mit einem entlang der Umlaufbahn angeordneten Fülltrichter (6),
wobei
jeder der Beutel hängend angeordnet ist, während er an zwei seiner Seiten von jedem der Vielzahl der Greifer (3) gegriffen wird,
die gegriffenen Beutel intermittierend gefördert werden,
jede der Vielzahl der Gaseinblasdüsen in jeden der Beutel eingeführt wird und während des Förderns der Beutel Gas einbläst, und,
während das Gas eingeblasen wird, die Beutel durch den Fülltrichter mit dem zu verpackenden Material befüllt werden, und
wobei der Fülltrichter (6I, 6J) mit einer konkaven Rille (29) vorgegebener Tiefe ausgeformt ist, die sich vertikal über eine Seitenwand erstreckt, und der Fülltrichter innerhalb einer vorgegebenen Zeit zwischen einer Befüllungsposition und einer zurückgezogenen Position läuft, so dass der Fülltrichter in der zurückgezogenen Position von der Umlaufbahn der intermittierend umlaufenden Gaseinblasdüsen zurückgezogen ist, und
die Gaseinblasdüse in der Befüllungsposition innerhalb der konkaven Rille angeordnet ist.

6. Intermittierende Transport-Drehbeutelbefüllungs- und Verpackungsmaschine mit
einer Vielzahl von in regelmäßigen Abständen entlang einer ringförmigen Umlaufbahn so angeordneten Greifern (3) zum Festhalten von Beuteln (5), dass sie in einer horizontalen Ebene intermittierend entlang der Umlaufbahn laufen,
einer Vielzahl von Gaseinblasdüsen (4), die zusammen mit jedem der Greifer angeordnet sind, mit den Greifern zusammen intermittierend laufen und innerhalb einer vorgegebenen Zeit während des intermittierenden Umlaufs angehoben und abgesenkt werden, und
mindestens einem Verpackungs- und Verarbeitungsglied mit einem entlang der Umlaufbahn angeordneten Fülltrichter (6),
wobei
jeder der Beutel hängend angeordnet ist, während er an zwei seiner Seiten von jedem der Vielzahl der Greifer gegriffen wird,
die gegriffenen Beutel intermittierend gefördert werden,
jede der Vielzahl der Gaseinblasdüsen in jeden der Beutel eingeführt wird und während des Förderns der Beutel Gas einbläst, und
während das Gas eingeblasen wird, die Beutel durch den Fülltrichter mit dem zu verpackenden Material befüllt werden, und
wobei
der Fülltrichter (6F, 6G, 6H) aus zwei Unter-Fülltrichtern (26, 27) besteht, die mit vorgegebenen Abstand voneinander angeordnet sind, und
der Fülltrichter innerhalb einer vorgegebenen Zeit zwischen einer Befüllungsposition und einer zurückgezogenen Position läuft, so dass der Fülltrichter in der zurückgezogenen Position von der Umlaufbahn der intermittierend umlaufenden Gaseinblasdüsen zurückgezogen ist und
in der Befüllungsposition die Gaseinblasdüse in dem Zwischenraum angeordnet ist.

7. Intermittierende Transport-Drehbeutelbefüllungs- und Verpackungsmaschine mit
einer Vielzahl von in regelmäßigen Abständen entlang einer ringförmigen Umlaufbahn so angeordneten Greifern (3) zum Festhalten von Beuteln (5), dass sie in einer horizontalen Ebene intermittierend entlang der ringförmigen Umlaufbahn laufen,
einer Vielzahl von Gaseinblasdüsen (4), die zusammen mit jedem der Greifer angeordnet sind, mit den Greifern zusammen intermittierend laufen und innerhalb einer vorgegebenen Zeit während der intermittierenden Bewegung angehoben und abgesenkt werden, und
mindestens einem Verpackungs- und Verarbeitungsglied mit einem entlang der Umlaufbahn angeordneten Fülltrichter (6),
wobei
jeder der Beutel hängend angeordnet ist, während er an zwei seiner Seiten von jedem der Vielzahl der Greifer gegriffen wird,
die gegriffenen Beutel intermittierend gefördert werden,
jede der Vielzahl der Gaseinblasdüsen in jeden der Beutel eingeführt wird und während des Förderns der Beutel Gas einbläst und,
während das Gas eingeblasen wird, die Beutel durch den Fülltrichter mit dem zu verpackenden Material befüllt werden, und
wobei
jede der Vielzahl der Gaseinblasdüsen an ihrem unteren Ende eine Abgabeöffnung (15) und ein im wesentlichen vertikales Eintragteil (16) aufweist, das beim Absenken in den Beutel eingeführt wird, sowie ein verlängertes Teil (17), das vom oberen Ende des Eintragteils (16) abgewinkelt ist und sich in Querrichtung erstreckt,
ein Ausschnittsteil (18) vorgegebener Tiefe in einer Seitenwand des Fülltrichters (6) von einem unteren Ende nach oben ausgeformt ist, und der Fülltrichter innerhalb einer vorgegebenen Zeit angehoben und abgesenkt wird, so dass,
wenn der Fülltrichter angehoben ist, der Fülltrichter von der Umlaufbahn der intermittierend umlaufenden Gaseinblasdüsen zurückgezogen ist, und
wenn der Fülltrichter abgesenkt ist, das verlängerte Teil (A) der Gaseinblasdüsen in das Ausschnittsteil (18) des Fülltrichters greift und das Eintragsteil, von oben betrachtet, im Innern des Fülltrichters liegt.

8. Intermittierende Transport-Drehbeutelbefüllungs- und Verpackungsmaschine nach Anspruch 7, wobei
ein dem Ausschnittsteil (18) des Fülltrichters entsprechendes flanschförmiges Abdeckglied (21) auf dem verlängerten Teil der Gaseinblasdüse vorgesehen ist und
wenn der Fülltrichter abgesenkt ist, das Abdeckglied das Ausschnittsteil im wesentlichen verschließt und einen Teil der Seitenwand des Fülltrichters bildet.

9. Intermittierende Transport-Drehbeutelbefüllungs- und Verpackungsmaschine mit
einer Vielzahl von in regelmäßigen Abständen entlang einer ringförmigen Umlaufbahn so angeordneten Greifern (3) zum Festhalten von Beuteln (5), dass sie in einer horizontalen Ebene intermittierend entlang der ringförmigen Umlaufbahn laufen,
einer Vielzahl von Gaseinblasdüsen (4), die zusammen mit jedem der Greifer angeordnet sind, mit den Greifern zusammen intermittierend laufen und innerhalb einer vorgegebenen Zeit während des intermittierenden Umlaufs angehoben und abgesenkt werden, und
mindestens einem Verpackungs- und Verarbeitungsglied mit einem entlang der Umlaufbahn angeordneten Fülltrichter (6),
wobei
jeder der Beutel hängend angeordnet ist, während er an zwei seiner Seiten von jedem der Vielzahl der Greifer gegriffen wird,
die gegriffenen Beutel intermittierend gefördert werden,
jede der Vielzahl der Gaseinblasdüsen in jeden der Beutel eingeführt wird und während des Förderns der Beutel Gas einbläst, und,
während das Gas eingeblasen wird, die Beutel durch den Fülltrichter mit dem zu verpackenden Material befüllt werden, und
wobei
der Fülltrichter (6E) aus zwei vertikal geteilten ersten (22) und zweiten (23) Fülltrichterteilen, die innerhalb einer vorgegebenen Zeit getrennt und zusammengesetzt werden, besteht,
ein ersten Fülltrichterteil (22) an jede der Vielzahl der Gaseinblasdüsen befestigt ist,
ein zweites Fülltrichterteil (23) innerhalb einer vorgegebenen Zeit angehoben und abgesenkt wird und in einer im wesentlichen horizontalen Ebene zwischen einer vorgeschobenen Position und einer zurückgesetzten Position läuft, so dass
in der zurückgesetzten Position das zweite Fülltrichterteil von der Umlaufbahn der intermittierend umlaufenden Gaseinblasdüsen zurückgesetzt ist, und
in der vorgeschobenen Position das zweite Fülltrichterteil zusammen mit dem ersten Fülltrichterteil den Fülltrichter bildet, so dass der Fülltrichter die Gaseinblasdüse einschließt.

10. Intermittierende Transport-Drehbeutelbefüllungs- und Verpackungsmaschine nach einem der Ansprüche 1 bis 9,
wobei
der Fülltrichter als Gleichlauftyp ausgebildet ist und entlang eines Teils eines Bereichs der Transportbahn der Beutel hin- und herläuft, und
der Fülltrichter während seiner Vorwärtsbewegung synchron mit einem Transport der Beutel läuft.

11. Intermittierende Transport-Drehbeutelbefüllungs- und Verpackungsmaschine nach einem der Ansprüche 1 bis 9,
wobei der Fülltrichter als stationärer Typ ausbildet ist und in einer festen Position auf der Transportbahn der Beutel angeordnet ist.

## Revendications

1. Appareil de remplissage et d'emballage rotatif de sacs (1), comprenant :
une pluralité d'éléments de saisie (3) pour maintenir des sacs (5), et installés à intervalles réguliers le long d'un trajet de déplacement annulaire de façon à se déplacer par intermittence le long du trajet de déplacement annulaire à l'intérieur d'un plan horizontal,
une pluralité de buses d'injection de gaz (4) qui sont respectivement installées en association avec chacun des éléments de saisie, qui se déplacent avec les éléments de saisie par intermittence et qui sont élevées et abaissées selon un minutage prédéterminé durant le déplacement intermittent, et
au moins un élément d'emballage et de traitement comprenant une trémie (6) disposé le long du trajet de déplacement ;
dans lequel :
chacun des sacs est suspendu tout en étant saisi à deux bords latéraux de celui-ci par chacun de la pluralité d'éléments de saisie (3),
les sacs (5) saisis sont transportés par intermittence,
chacune de la pluralité de buses d'injection de gaz (4) est insérée dans chacun des sacs et injecte du gaz à l'intérieur de celui-ci durant le transport des sacs, et
les sacs sont remplis d'un matériau à emballer par l'intermédiaire de la trémie (6) tandis que l'injection de gaz est en cours ; et
dans lequel :
la trémie (6B) est constituée par deux parties de trémies divisées verticalement (22, 23) qui sont séparées et réunies selon un minutage prédeterminé,
la trémie est élevée et abaissée selon un minutage prédéterminé,
lorsque les deux parties de trémie sont séparées, la trémie (6B) est rétractée à partir du trajet de déplacement des buses d'injection de gaz se déplaçant par intermittence, et
lorsque les deux parties de trémie sont réunies, la trémie prend une forme cylindrique et renferme à l'intérieur de celle-ci la buse d'injection de gaz.

2. Appareil de remplissage et d'emballage rotatif de sacs, comprenant :
une pluralité d'éléments de saisie (3) pour maintenir des sacs (5), et installés à intervalles réguliers le long d'un trajet de déplacement annulaire de façon à se déplacer par intermittence le long du trajet de déplacement annulaire à l'intérieur d'un plan horizontal,
une pluralité de buses d'injection de gaz (4) qui sont respectivement installées en association avec chacun des éléments de saisie, qui se déplacent avec les éléments de saisie par intermittence et qui sont élevées et abaissées selon un minutage prédéterminé durant le déplacement intermittent, et
au moins un élément d'emballage et de traitement comprenant une trémie (6) disposé le long du trajet de déplacement ;
dans lequel :
chacun des sacs est suspendu tout en étant saisi à deux bords latéraux de celui-ci par chacun de la pluralité d'éléments de saisie (3),
les sacs saisis sont transportés par intermittence,
chacune de la pluralité de buses d'injection de gaz est insérée dans chacun des sacs et injecte du gaz à l'intérieur de celui-ci durant le transport des sacs, et
les sacs sont remplis d'un matériau à emballer par l'intermédiaire de la trémie tandis que l'injection de gaz est en cours ; et
dans lequel :
la trémie (6C, 6D) est constituée par deux parties de trémies divisées verticalement (22, 23) qui sont séparées et réunies selon un minutage prédéterminé,
la trémie est élevée et abaissée selon un minutage prédéterminé et se déplace entre une position avancée et une position rétractée à l'intérieur d'un plan sensiblement horizontal, de telle sorte que :
lorsque les deux parties de trémie sont séparées, la trémie se déplace en évitant la buse d'injection de gaz, et, dans la position rétractée, elle est rétractée à partir du trajet de déplacement des buses d'injection de gaz se déplaçant par intermittence, et
lorsque les deux parties de trémie sont réunies dans la position avancée, la trémie prend une forme cylindrique et renferme à l'intérieur de celle-ci la buse d'injection de gaz.

3. Appareil de remplissage et d'emballage rotatif de sacs selon la revendication 1, dans lequel les deux parties de trémie sont reliées par une charnière (24) et sont séparées et réunies lorsqu'elles sont ouvertes et fermées le long d'un axe de la charnière.

4. Appareil de remplissage et d'emballage rotatif de sacs selon la revendication 2, dans lequel les deux parties de trémie sont reliées par une charnière (24) et sont séparées et réunies lorsqu'elles sont ouvertes et fermées le long d'un axe de la charnière.

5. Appareil de remplissage et d'emballage rotatif de sacs, comprenant :
une pluralité d'éléments de saisie (3) pour maintenir des sacs (5), et installés à intervalles réguliers le long d'un trajet de déplacement annulaire de façon à se déplacer par intermittence le long du trajet de déplacement annulaire à l'intérieur d'un plan horizontal,
une pluralité de buses d'injection de gaz (4) qui sont respectivement installées en association avec chacun des éléments de saisie, qui se déplacent avec les éléments de saisie par intermittence et qui sont élevées et abaissées selon un minutage prédéterminé durant le déplacement intermittent, et
au moins un élément d'emballage et de traitement comprenant une trémie (6) disposé le long du trajet de déplacement ;
dans lequel :
chacun des sacs est suspendu tout en étant saisi à deux bords latéraux de celui-ci par chacun de la pluralité d'éléments de saisie (3),
les sacs saisis sont transportés par intermittence,
chacune de la pluralité de buses d'injection de gaz est insérée dans chacun des sacs et injecte du gaz à l'intérieur de celui-ci durant le transport des sacs, et
les sacs sont remplis d'un matériau à emballer par l'intermédiaire de la trémie tandis que l'injection de gaz est en cours ; et
dans lequel :
la trémie (6I, 6J) est formée avec une rainure concave (29) d'une profondeur prédéterminée s'étendant verticalement à travers une paroi latérale de celle-ci, et
la trémie se déplace entre une position de remplissage et une position rétractée selon un minutage prédéterminé, de telle sorte que :
dans la position rétractée, la trémie est rétractée à partir du trajet de déplacement des buses d'injection de gaz se déplaçant par intermittence, et
dans la position de remplissage, la buse d'injection de gaz est positionnée à l'intérieur de la rainure concave.

6. Appareil de remplissage et d'emballage rotatif de sacs, comprenant :
une pluralité d'éléments de saisie (3) pour maintenir des sacs (5), et installés à intervalles réguliers le long d'un trajet de déplacement annulaire de façon à se déplacer par intermittence le long du trajet de déplacement annulaire à l'intérieur d'un plan horizontal,
une pluralité de buses d'injection de gaz (4) qui sont respectivement installées en association avec chacun des éléments de saisie, qui se déplacent avec les éléments de saisie par intermittence et qui sont élevées et abaissées selon un minutage prédéterminé durant le déplacement intermittent, et
au moins un élément d'emballage et de traitement comprenant une trémie (6) disposé le long du trajet de déplacement ;
dans lequel :
chacun des sacs est suspendu tout en étant saisi à deux bords latéraux de celui-ci par chacun de la pluralité d'éléments de saisie,
les sacs saisis sont transportés par intermittence,
chacune de la pluralité de buses d'injection de gaz est insérée dans chacun des sacs et injecte du gaz à l'intérieur de celui-ci durant le transport des sacs, et
les sacs sont remplis d'un matériau à emballer par intermédiaire de la trémie tandis que l'injection de gaz est en cours ; et
dans lequel :
la trémie (6F, 6G, 6H) est constituée par deux sous-trémies (26, 27) disposées avec un espace prédéterminé entre celles-ci, et
la trémie se déplace entre une position de remplissage et une position rétractée selon un minutage prédéterminé, de telle sorte que :
dans la position rétractée, la trémie est rétractée à partir du trajet de déplacement des buses d'injection de gaz se déplaçant par intermittence, et
dans la position de remplissage, la buse d'injection de gaz est positionnée dans l'espace.

7. Appareil de remplissage et d'emballage rotatif de sacs, comprenant :
une pluralité d'éléments de saisie (3) pour maintenir des sacs (5), et installés à intervalles réguliers le long d'un trajet de déplacement annulaire de façon à se déplacer par intermittence le long du trajet de déplacement annulaire à l'intérieur d'un plan horizontal,
une pluralité de buses d'injection de gaz (4) qui sont respectivement installées en association avec chacun des éléments de saisie, qui se déplacent avec les éléments de saisie par intermittence et qui sont élevées et abaissées selon un minutage prédéterminé durant le déplacement intermittent, et
au moins un élément d'emballage et de traitement comprenant une trémie (6) disposé le long du trajet de déplacement ;
dans lequel :
chacun des sacs est suspendu tout en étant saisi à deux bords latéraux de celui-ci par chacun de la pluralité d'éléments de saisie,
les sacs saisis sont transportés par intermittence,
chacune de la pluralité de buses d'injection de gaz est insérée dans chacun des sacs et injecte du gaz à l'intérieur de celui-ci durant le transport des sacs, et
les sacs sont remplis d'un matériau à emballer par l'intermédiaire de la trémie tandis que l'injection de gaz est en cours ; et
dans lequel :
chacune de la pluralité de buses d'injection de gaz comporte une ouverture de délivrance (15) à une extrémité inférieure de celle-ci et comporte une partie d'insertion sensiblement verticale (16) qui est insérée dans le sac lorsqu'elle est abaissée et une partie étendue (17) qui est incurvée de façon à s'éloigner à partir d'une extrémité supérieure de la partie d'insertion et qui s'étend dans une direction transversale ;
une partie entaillée (18) d'une profondeur prédéterminée est formée dans une paroi latérale de la trémie (6) vers le haut à partir d'une extrémité inférieure de celle-ci ; et
la trémie est élevée et abaissée selon un minutage prédéterminé, de telle sorte que :
lorsque la trémie est élevée, la trémie est rétractée à partir du trajet de déplacement des buses d'injection de gaz se déplaçant par intermittence, et
lorsque la trémie est abaissée, la partie étendue (17) de la buse d'injection de gaz entre dans la partie entaillée (18) de la trémie, et la partie d'insertion est disposée à l'intérieur de la trémie, en vue de dessus.

8. Appareil de remplissage et d'emballage rotatif de sacs selon la revendication 7, dans lequel :
un élément de capot en forme de bride (21) correspondant à la partie entaillée (18) de la trémie est disposé sur la partie d'extension de la buse d'injection de gaz ; et
lorsque la trémie est abaissée, l'élément de capot scelle de façon sensiblement étanche la partie entaillée et fait partie de la paroi latérale de la trémie.

9. Appareil de remplissage et d'emballage rotatif de sacs, comprenant :
une pluralité d'éléments de saisie (3) pour maintenir des sacs (5), et installés à intervalles réguliers le long d'un trajet de déplacement annulaire de façon à se déplacer par intermittence le long du trajet de déplacement annulaire à l'intérieur d'un plan horizontal,
une pluralité de buses d'injection de gaz (4) qui sont respectivement installées en association avec chacun des éléments de saisie, qui se déplacent avec les éléments de saisie par intermittence et qui sont élevées et abaissées selon un minutage prédéterminé durant le déplacement intermittent, et
au moins un élément d'emballage et de traitement comprenant une trémie (6) disposé le long du trajet de déplacement ;
dans lequel :
chacun des sacs est suspendu tout en étant saisi à deux bords latéraux de celui-ci par chacun de la pluralité d'éléments de saisie,
les sacs saisis sont transportés par intermittence,
chacune de la pluralité de buses d'injection de gaz est insérée dans chacun des sacs et injecte du gaz à l'intérieur de celui-ci durant le transport des sacs, et
les sacs sont remplis d'un matériau à emballer par l'intermédiaire de la trémie tandis que l'injection de gaz est en cours ; et
dans lequel :
la trémie (6E) est constituée par deux première (22) et deuxième (23) parties de trémie divisées verticalement qui sont séparées et réunies selon un minutage prédéterminé, et comporte :
une première partie de trémie (22) qui est fixée à chacune de la pluralité de buses d'injection de gaz, et
une deuxième partie de trémie (23) qui est élevée et abaissée selon un minutage prédéterminé et qui se déplace entre une position avancée et une position rétractée à l'intérieur d'un plan sensiblement horizontal, de telle sorte que :
dans la position rétractée, la deuxième partie de trémie est rétractée à partir du trajet de déplacement des buses d'injection de gaz se déplaçant par intermittence, et
dans la position avancée, la deuxième partie de trémie constitue la trémie avec la première partie de trémie, de telle sorte que la trémie renferme à l'intérieur de celle-ci la buse d'injection de gaz.

10. Appareil de remplissage et d'emballage rotatif de sacs selon l'une quelconque des revendications 1 à 9, dans lequel :
la trémie est d'un type à suivi et effectue un va-et-vient le long d'une partie d'une plage d'un trajet de transport des sacs, et
la trémie, durant un mouvement de déplacement vers l'avant de celle-ci, se déplace en synchronisme avec un transport des sacs.

11. Appareil de remplissage et d'emballage rotatif de sacs selon l'une quelconque des revendications 1 à 9, dans lequel la trémie est d'un type stationnaire et est disposée dans une position fixe le long d'un trajet de transport des sacs.
